# EUROPEAN PATENT APPLICATION

(11) **EP 3 771 245 A1**
(43) Date of publication of application: **27.01.2021**
(21) Application number: 20197573.7
(22) Date of filing: 09.05.2018
(51) Int. Cl.: H04W 12/06, H04L 29/06, H04L 9/08, H04L 9/14, H04L 9/32

(54) **PRIVACY PROTECTION AND EXTENSIBLE AUTHENTICATION PROTOCOL AUTHENTICATION AND AUTHORIZATION IN CELLULAR NETWORKS**

(30) Priority: 09.05.2017 US 201762503527 P; 28.07.2017 US 201762538554 P
(62) Divisional of application: 18727944.3
(71) Applicant: Intel IP Corporation, Santa Clara, CA 95054 (US)
(72) Inventor: ADRANGI, Farid, Lake Oswego, Oregon OR 97035 (US); KOLEKAR, Abhijeet Ashok, Hillsboro, Oregon OR 97124 (US); STOJANOVSKI, Alexandre Saso, 75 75020 Paris (FR); CHIN, Chen Ho, VWV 8540 Deerlijk (BE); NASSAR, Mohamed Amin, BY 90419 Nuremberg (DE); WLOKA, Raimund, 90579 Langenzenn (DE); SOLIMAN, Ahmed, BY 90449 Nuremberg (DE); LIU, Xiruo, Portland, OR 97229 (US); LIAO, Ching-Yu, Portland, OR 97229 (US)
(74) Representative: HGF

(57) **Abstract**

Systems and methods are provided for security systems and procedures. Certain embodiments herein are directed to privacy protection for a permanent subscriber identifier. Other embodiments are directed to support of extensible authentication protocol (EAP) authentication and authorization by 5G non-access stratum (NAS).

## Description

### Related Applications

This application claims the benefit of U.S. Provisional Patent Application No. 62/503,527, filed May 9, 2017, and U.S. Provisional Patent Application No. 62/538,554, filed July 28, 2017, each of which is hereby incorporated by reference herein in its entirety.

### Technical Field

This application relates generally to wireless communication systems, and more specifically to security systems and procedures.

### Background

Wireless mobile communication technology uses various standards and protocols to transmit data between a base station and a wireless mobile device. Wireless communication system standards and protocols can include the third Generation Partnership Project (3GPP) long term evolution (LTE); the Institute of Electrical and Electronics Engineers (IEEE) 802.16 standard, which is commonly known to industry groups as worldwide interoperability for microwave access (WiMAX); and the IEEE 802.11 standard for wireless local area networks (WLAN), which is commonly known to industry groups as Wi-Fi; and the MulteFire standard developed by MulteFire Alliance. In 3GPP radio access networks (RANs) in LTE systems, the base station can include a RAN node such as a Evolved Universal Terrestrial Radio Access Network (E-UTRAN) Node B (also commonly denoted as evolved Node B, enhanced Node B, eNodeB, or eNB) and/or Radio Network Controller (RNC) in an E-UTRAN, which communicate with a wireless communication device, known as user equipment (UE) and in MulteFire systems can include a MF-AP. In next generation (NextGen) or fifth generation (5G) wireless RANs, RAN Nodes can include a 5G node, new radio (NR) node or g Node B (gNB). Additional details of 5G systems are discussed below.

### Brief Description of the Drawings

FIG. 1 is a signal flow diagram of a simplified attach request with encrypted IMSI according to certain embodiments.
FIG. 2 is a signal flow diagram of a simplified attach request with a timestamp and encrypted IMSI according to certain embodiments.
FIG. 3 is a signal flow diagram of an example attach procedure when a replay is detected according to certain embodiments.
FIG. 4 is a signal flow diagram illustrating an example EAP authentication and authorization procedure according to one embodiment.
FIG. 5 is a signal flow diagram illustrating an example EAP authentication and authorization procedure according to one embodiment.
FIG. 6 is a signal flow diagram illustrating an example procedure according to certain embodiments.
FIG. 7 is a signal flow diagram illustrating an example PDU modification procedure according to one embodiment.
FIG. 8 is a signal flow diagram illustrating an example paging procedure according to one embodiment.
FIG. 9 is a signal flow diagram illustrating an example re-authentication procedure according to certain embodiments.
FIGS. 10A and 10B illustrate several signal flow diagrams of example EAP-failure sent via NAS enclosure procedure messages according to certain embodiments.
FIG. 11 illustrates an architecture of a system of a network in accordance with some embodiments.
FIG. 12 illustrates an architecture of a system of a network in accordance with some embodiments.
FIG. 13 illustrates example components of a device in accordance with some embodiments.
FIG. 14 illustrates example interfaces of baseband circuitry in accordance with some embodiments.
FIG. 15 is an illustration of a control plane protocol stack in accordance with some embodiments.
FIG. 16 is an illustration of a user plane protocol stack in accordance with some embodiments.
FIG. 17 illustrates components of a core network in accordance with some embodiments.
FIG. 18 is a block diagram illustrating components, according to some example embodiments, able to read instructions from a machine-readable or computer-readable medium and perform any one or more of the methodologies discussed herein.
FIG. 19 is a block diagram illustrating an example group keys management process according to one embodiment.

### Detailed Description of Preferred Embodiments

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B).

Certain embodiments herein are directed to privacy protection for a permanent subscriber identifier. Other embodiments are directed to support of extensible authentication protocol (EAP) authentication and authorization by 5G non-access stratum (NAS).

### A. Privacy Protection for Permanent Subscriber Identifiers

In a 3GPP system, a permanent subscription identifier (e.g., an international mobile subscriber identity (IMSI) in LTE or Subscription Permanent Identifier (SUPI) in 5G) is used for identifying a UE in a communication. However, actively or passively transmitting such permanent subscription identifiers has been a vulnerability that may result in compromise of the subscription privacy (especially the subscription location). Therefore, concealing permanent identifiers used in a next generation (e.g., 5G) system, which is relevant to privacy, is an issue towards achieving the subscription privacy.

Embodiments herein relate to solutions to address the aforementioned issue by encrypting the permanent identifier so as to achieve privacy, nontraceability and unlinkability. In addition, the embodiments may reduce or prevent replay and denial of service (DoS) attacks.

In certain embodiments, the UE never sends its permanent identifier (e.g., IMSI) in clear (i.e., unencrypted text), but only encrypts it using a (verified) public key of the home public land mobile network (PLMN). The home PLMN has a public key (PK) and a corresponding private key (SK). The PK can be preconfigured, for example, on a universal subscriber identity module (USIM) at the UE. In such cases, a public key infrastructure may not be necessary.

Certain embodiments use an asymmetric encryption to encrypt a mobile subscriber identification number (MSIN) (e.g., assigned by an operator) in the IMSI for privacy protection. Randomness may also be introduced into the encryption operation to provide nontraceability and unlinkability.

In certain embodiments, a nonce or timestamp is used to prevent replay attack and mitigate DoS.

In addition, or in other embodiments, a public key refreshing mechanism is specified to enable smooth rollover for the home PLMN's public key with an authenticity guarantee.

Thus, the disclosed embodiments may provide one or more of the following benefits: protect privacy of the permanent subscriber identifier, wherein the permanent subscriber identifier is encrypted by the home PLMN, and no one else except the UE and the home PLMN knows the permanent subscriber identifier; achieve nontraceability and unlinkability, wherein embodiments introduce randomness and provide nontraceability and unlinkability of the permanent subscriber identifier so that the UE cannot be traced if a sequence of encrypted IMSI are observed, and any of two encrypted IMSI cannot be linked together; prevent replay attacks and mitigate DoS attacks; remove the need for a global public key infrastructure (PKI), wherein the UE only needs to store its home PLMN's public key; and/or satisfy lawful interception (LI) requirements, wherein the UE's identity is revealed to the serving PLMN after successful authentication.

In certain embodiments, next generation or 5G networks use private keys, and UEs can obtain the corresponding public keys and verify their authenticity. In certain such embodiments, the UE never sends its permanent identifier (e.g., IMSI) in clear, but only encrypts it using the (verified) public key of the home PLMN.

Embodiments may use asymmetric encryption to encrypt MSIN for privacy protection. Randomness is introduced into the encryption operation to provide nontraceability and unlinkability. Furthermore, embodiments may use a nonce value or a timestamp to prevent a replay attack. The nonce value, which can only be used once, may be, for example, an arbitrary number, a hash value, a random number, or a pseudo-random number.

One or more of the following assumptions may relate to various embodiments: the home PLMN has a public key (PK) and a corresponding private key (SK), the PK can be preconfigured on the USIM at the UE, and a public key infrastructure is not necessary; an access and mobility function (AMF) is at a serving PLMN; a security anchor function (SEAF) is at the home PLMN; and/or an IMSI structure includes a mobile country code (MCC), a mobile network code (MNC), and the MSIN, wherein only the MSIN in the IMSI is encrypted with PK, and the MCC and MNC are not encrypted as they may be used for routing in roaming use cases.

### A(1) Example attach request with encrypted IMSI

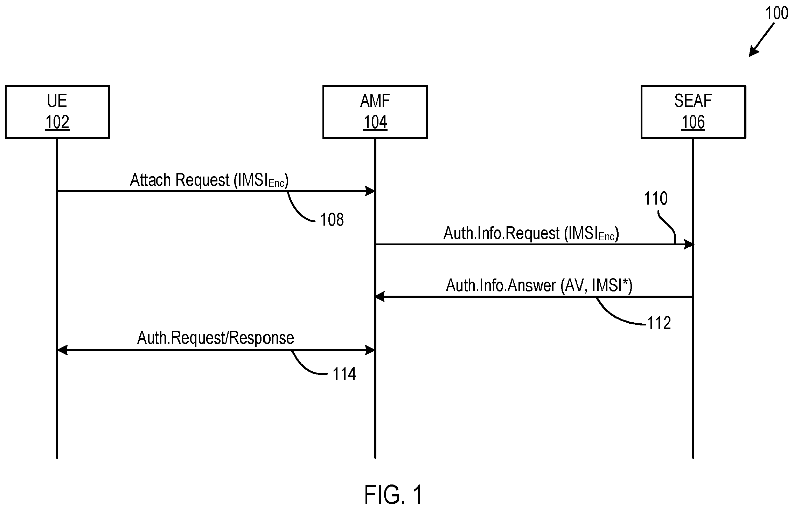

FIG. 1 is a signal flow diagram of a simplified attach request with encrypted IMSI according to certain embodiments. The example attach procedure 100 shown in FIG. 1 may be used, for example, only when there is no UE/AMF security context. FIG. 1 illustrates a UE 102, an AMF 104, and a SEAF 106. The example attach procedure 100 includes an attach requests 108 sent from the UE 102 to the AMF 104, an authentication information request 110, sent from the AMF 104 to the SEAF 106, an authentication information answer 112 sent from the SEAF 106 to the AMF 104, and an authentication request/response process 114 between the AMF 104 and the UE 102.

The MSIN in IMSI identifies the UE 102 and is encrypted with PK. A random number N is introduced into the encryption operation as follows: IMSI_{Enc} = MCC ∥ MNC ∥ Enc_{PK}(MSIN, N), where MCC and MNC are not encrypted as they need to be used for routing in roaming cases, ∥ is a concatenation operation, and Enc_{PK}(X) means using key PK to encrypt plaintext X. The UE 102 sends the initial attach request 102 including the IMSI_{Enc} to the AMF 104.

In certain embodiments, the IMSI corresponds to a subscription permanent identifier (SUPI) and the IMSI_{Enc} corresponds to a subscription concealed identifier (SUCI). In a 5G system, the globally unique 5G subscription permanent identifier is called SUPI and the SUCI is a privacy preserving identifier containing the concealed SUPI. The SUPI is privacy protected over-the-air by using the SUCI. The UE may generate a SUCI using a protection scheme with a raw public key that is securely provisioned in control of home network. In certain embodiments, a SUCI is a one-time use subscription identifier, which contains the concealed subscription identifier, e.g., MSIN.

The AMF 104 forwards the IMSI_{Enc} to the SEAF 106 in the authentication information request 110. In a roaming scenario, this will be forwarded to the home PLMN for attachment.

After receiving the authentication information request, the home PLMN decrypts the IMSI_{Enc} and extracts MSIN and N. The home PLMN first verifies if the N is fresh. If the home PLMN has seen N before, a replay attack is detected, and the authentication is rejected following procedures. If N is fresh, the home PLMN uses MSIN to identify the UE 102 and generates an authentication vector (AV) for the authentication information answer 112. To satisfy legal intercept (LI) requirements, according to certain embodiments, the authentication information answer 112 message also carries IMSI*, which is the IMSI protected by the key shared between the AMF 104 and the SEAF 106.

The AMF 104 then forwards the authentication response to the UE 102 and completes the example attach procedure 100.

In legacy evolved packet systems (EPS), an attach request is unprotected and is vulnerable to a replay attack. This issue remains unsolved and may result in DoS attacks in the next generation or 5G systems even if an asymmetric cryptography (crypto) algorithm is used. Using the public key of the home PLMN to encrypt MSIN for privacy protection is at the cost of asymmetric decryption at the home PLMN. However, unauthorized third parties may replay the attach request (with IMSI_{Enc}) and force the home PLMN to perform the nontrivial asymmetric decryption operation, which might result in DoS. Therefore, certain embodiments herein are to prevent a replay attack.

### A(2) Example attach request with timestamp and encrypted IMSI

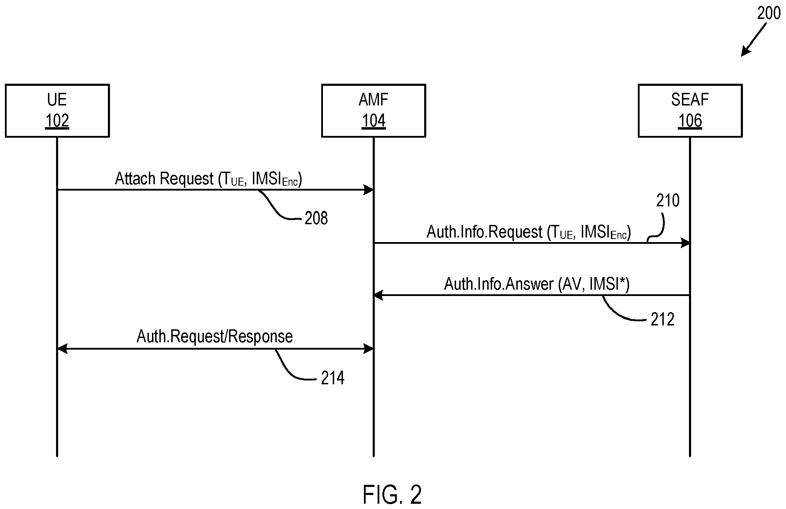

To prevent a replay attack and mitigate DoS, an alternative approach to the example embodiments shown in FIG. 1 is to use a timestamp, which assumes a loose time synchronization between the UE and the home PLMN. For example, FIG. 2 is a signal flow diagram of a simplified attach request with a timestamp and encrypted IMSI according to certain embodiments. FIG. 2 shows an example attach procedure 200 using an approach for randomness introduced in the encrypted portion of the attach request. In this example, the UE 102 may adjust its clock from receiving synchronization signals from the radio network. For protection against a replay attack, a coarse synchronization between the network and the UE 102 is sufficed.

The UE 102 includes a current timestamp T_{UE} and IMSI_{Enc} in an initial attach request 208 to the AMF 104. To generate IMSI_{Enc}, the UE 102 first computes N as N = MT_{UE}), where K is the symmetric key shared between the UE's USIM and the home PLMN, f_{K}( ) is a keyed hash function using key K, and the UE 102 computes IMSI_{Enc} with N as specified above.

The AMF 104 sends an authentication information request 210 to the SEAF 106 of the home PLMN including the T_{UE} and the IMSI_{Enc}. After receiving the authentication information request, the home PLMN first verifies UE's timestamp T_{UE}. In certain embodiments, the authentication request is only valid if -Tₜₕ₁ < (Tₕₒₘₑ - T_{UE}) < Tₜₕ₂, where Tₕₒₘₑ is the current timestamp of the home PLMN, and Tₜₕ₁ and Tₜₕ₂ are the thresholds that specify the time range in which authentication requests will be accepted. If T_{UE} does not fall into the allowed range, the attach request is determined as a replay and will be rejected. If T_{UE} is valid, however, the home PLMN decrypts IMSI_{Enc} to extract MSIN and N. The home PLMN verifies if N is derived correctly from T_{UE} and K using N = f_{K}(T_{UE}).

The home PLMN uses MSIN to identify the UE 102 and generates an AV for an authentication information answer 212. To satisfy LI requirements, according to certain embodiments, the authentication information answer 212 message also carries IMSI*. The AMF 104 then forwards the authentication response to the UE 102 and completes the example attach procedure 200.

### A(3) Examples for preventing replay attacks

In LTE, an attack is possible by replaying an initial attach request. When an attacker replays the initial attach request, the mobility management entity (MME) requests authentication information from the home subscriber server (HSS) and/or authentication center (AuC). After receiving an authentication information answer from the HSS, the MME exchanges an authentication request and response with the UE. The replay may be detected by the MME, resulting in an authentication reject from the MME to the UE. Meanwhile, the MME also notifies the authentication failure to the HSS. The consequences of such replay attack may be denial of service at the home PLMN. If the home PLMN may enforce access control by blocking UEs, a legitimate UE may be rejected by the MME.

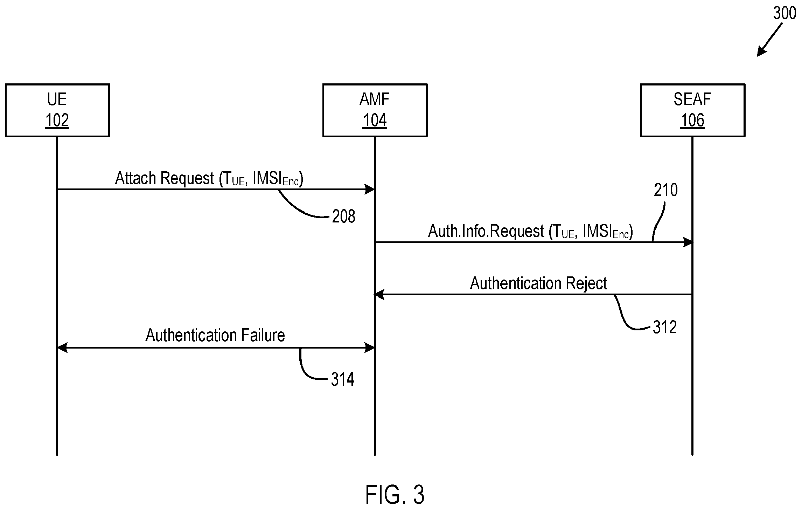

Thus, certain embodiments follow a similar attach procedure as the current EPS with an added replay prevention mechanism, which can reduce signaling overhead. FIG. 3 is a signal flow diagram of an example attach procedure 300 when a replay is detected according to certain embodiments. The example attach procedure 300 includes the UE 102 sending the attach request 208 to the AMF 104, and the AMF 104 sending the authentication information request 210 to the SEAF 106 of the home PLMN, as discussed above in FIG. 2. In the example shown in FIG. 3, however, a replay is detected at the home PLMN. The SEAF 306 of the home PLMN sends an authentication reject 312 message to the AMF 104, which then notifies the UE 102 with an authentication failure 314 message. Here the authentication request/response exchange between the UE 102 and the serving PLMN is saved. Additionally, the authentication failure notification from the serving PLMN to the home PLMN is saved.

### A(4) Examples for public key refresh

The public key of the home PLMN is provisioned on the UE. This public key may be refreshed and provisioned to the UE before it expires or when detecting the corresponding private key is compromised. Certain embodiments guarantee the authenticity of the new public key and prevent provisioning a fake public key onto the UE.

If the UE's security context exists, the new public key of the home PLMN can be sent to the UE, protected with the symmetric key shared between the UE and the home PLMN (e.g., K_{ASME}). If the UE's security context does not exist, the new public key may be protected using key K shared between USIM and the home PLMN. Either encryption or MAC can be used as a proof of the authenticity.

For regular periodic public key refreshing, according to certain embodiments, there is a grace period that allows both the new public key and the old public key. There will be a delay between enabling the new public key at the home PLMN and the delivery of the public key to the UE. Also, the UEs may receive the new public key at different times. Therefore, a grace period may be specified to allow smooth transition from the old public to the new public key.

### A(5) Additional Examples

The following are additional examples related to privacy protection for permanent subscriber identifiers.
Example 1A may include a mechanism by which a NextGen user equipment (UE) attaches with an operator using the operator's public key.
Example 2A may include a mechanism by which the NextGen UE encrypts the subscriber identifier (e.g., international mobile subscriber identity (IMSI)) and uses it in the initial attach message.
Example 3A may include a mechanism by which the replay attack is prevented during initial authentication message using randomness while encrypting the subscriber identifier.
Example 4A may include a mechanism by which the replay attack is prevented during initial authentication message using timestamps and verification of timestamp at operator to prevent the replay attack.
Example 5A may include a mechanism by which an operator uses shared symmetric key between UE and operator to refresh the public key used for encrypting the subscriber identifier in an initial authentication message.
Example 6A may include an apparatus comprising means to perform one or more elements of a method described in or related to any of Examples 1A-5A, or any other method or process described herein.
Example 7A may include one or more non-transitory computer-readable media comprising instructions to cause an electronic device, upon execution of the instructions by one or more processors of the electronic device, to perform one or more elements of a method described in or related to any of Examples 1A-5A, or any other method or process described herein.
Example 8A may include an apparatus comprising logic, modules, or circuitry to perform one or more elements of a method described in or related to any of Examples 1A-5A, or any other method or process described herein.
Example 9A may include a method, technique, or process as described in or related to any of Examples 1A-5A, or portions or parts thereof.
Example 10A may include an apparatus comprising: one or more processors and one or more computer readable media comprising instructions that, when executed by the one or more processors, cause the one or more processors to perform the method, techniques, or process as described in or related to any of Examples 1A-5A, or portions thereof.
Example 11A may include a signal as described in or related to any of Examples 1A-5A, or portions or parts thereof.
Example 12A may include a signal in a wireless network as shown and described herein.
Example 13A may include a method of communicating in a wireless network as shown and described herein.
Example 14A may include a system for providing wireless communication as shown and described herein.
Example 15A may include a device for providing wireless communication as shown and described herein.

### B. Support of EAP Authentication and Authorization by 5G NAS

Other embodiments support EAP authentication and authorization in 5G NAS. In 5G systems (5GS), extensible authentication protocol (EAP)- authentication and key agreement (AKA) has been chosen to be the protocol to perform authentication and authorization. EAP-AKA, which is detailed in RFC 3748, is a generic transport where within EAP-AKA messages the actual authentication and authorization method is embedded/carried. Thus, the method to perform authentication is not tied to the chosen signaling.

This is a departure for 3GPP, which has up to now (and since Global System for Mobile communication (GSM)) deployed a challenge/response method comprising a single exchange of protocol messages including an authentication request message (carrying the challenge) and an authentication response message (carrying the signed response). With EAP-AKA, there are a number of exchange/ handshakes - not just a single exchange/handshake - to complete the authentication and authorization procedure between the UE and the network. This may be referred to as a "primary authentication."

Additionally, 5GS may also include authentication and authorization procedures at the application level. So when an application starts and for the service that the application is started for, that application (e.g., an end user of that application) will face an authentication and authorization checks from the corresponding application server that provides that service. This can be viewed as an application client being authenticated and authorized by a third-party application server through the underlying 3GPP 5G network/system. This may be referred to as a "secondary authentication." EAP-AKA methods may be used for the secondary authentication between the client and the third-party server, with the 3GPP system providing the means and methods to carry out the EAP-AKA exchanges between the client and third-party server.

Furthermore, the secondary authentication is carried out at a session management level, which is the level that establishes and manages the protocol data unit (PDU) session that is associated with the user/client application that is subject to the third-party server's authentication. Added to this problem is that the EAP-AKA procedure for 5GS may require multiple exchanges/handshakes for which transport is supported by the session management level.

Another problem may arise from the need to support re-authentication. Re-authentication is when the network (NW) has already performed authentication and authorization of the user (or application) but, because of certain reasons, the NW needs to repeat or redo the authentication procedure. Such reasons can be, for example, that it has been some time since the user (or application) has been authenticated and to be secure, a refresh of security keys is required. Another reason can be that certain aspects of the user (or user application) has changed, for instance, the user has level of subscription has upgraded or downgraded.

Such re-authentication may exist in legacy 3GPP systems (e.g., GSM, GPRS, UMTS, LTE/SAE) but although not explicitly clear in present 5G systems, may also be needed in 5G. For instance, in 2G, 3G and in 4G, the NW can send an authentication request to a UE with a challenge any time the UE has a radio resource control (RRC) connection and the UE can respond back with a signed respond in an authentication response. But as described above, this re-authentication procedure in 5G include multiple exchanges/handshakes and may be supported at the session management level.

With the adoption of EAP for 5G security (authentication and authorization), another associated problem comes about by EAP itself supporting the use of EAP-success indicators, which may be used by an authenticator towards the client in the event that the EAP authentication and authorization is successful, and the use of EAP-failure indicators, which can be used by the authenticator towards the client when the authenticator considers the process to have failed and wishes to indicate the failure to the client. Furthermore, on the client side, the client can choose not to continue with the authentication/authorization and indicate a failure to the underlying layer. For example, when EAP-failure/EAP-success indicator is sent by authenticator, the client may indicate a failure to underlying layers which needs to be conveyed back to 5G core network (5G CN or 5GC) and authenticator. As used herein, the EAP-failure indicator and EAP-success indicator may be referred to simply as "EAP-Failure" and "EAP-Success", respectively, for the sake of brevity.

To solve or alleviate the above discussed problems/issues, various embodiments may include: mobility management (MM) and session management (SM) on the UE side and the 5GC side support multiple exchanges of authentication request/response handshakes, as many of these handshakes as is necessary for the EAP protocol to carry the EAP request types in support of EAP methods; the MM and SM receives and sends the authentication request/response messages but do not do the actual authentication, but passes or forwards the provided EAP message and EAP request types to/from EAP client/EAP server; EAP-success and/or EAP-failure can be conveyed through the underlying MM or SM procedures; and/or individual one way MM or SM signaling messages.

Current standards do not have means to support multiple exchanges of EAP messages in one authentication and authorization procedure. Additionally, current standards do not have support for a one way signaling message for provision of outcome of the EAP procedure.

### B(1) Multiple authentication request and authentication response pairs

In various embodiments, each pair of authentication request and authentication response handshake messages can be repeated however many times as is necessary to complete the EAP authentication and authorization procedure, wherein each pair of authentication request/response carries, transports, and/or contains the EAP request type.

For example, the EAP message (e.g., EAP-Request, EAP-Response) and the EAP type (e.g., AKA-challenge) may be carried within the authentication request and authentication response.

The UE NAS layer and MM may be the protocol layers that send and receive the authentication request and authentication response respectively, and may act as the transport for the EAP process and do not process the EAP request types or methods. These aforementioned authentication messages may be sent and received using NAS signaling messages. On receipt of the authentication request, the UE NAS may provide what is carried within that message (e.g., the EAP message and EAP request type) to the layer above. And when the layer above hands back a container that carries the respond EAP message and EAP request type, the UE NAS may place this within the authentication response and send that onwards.

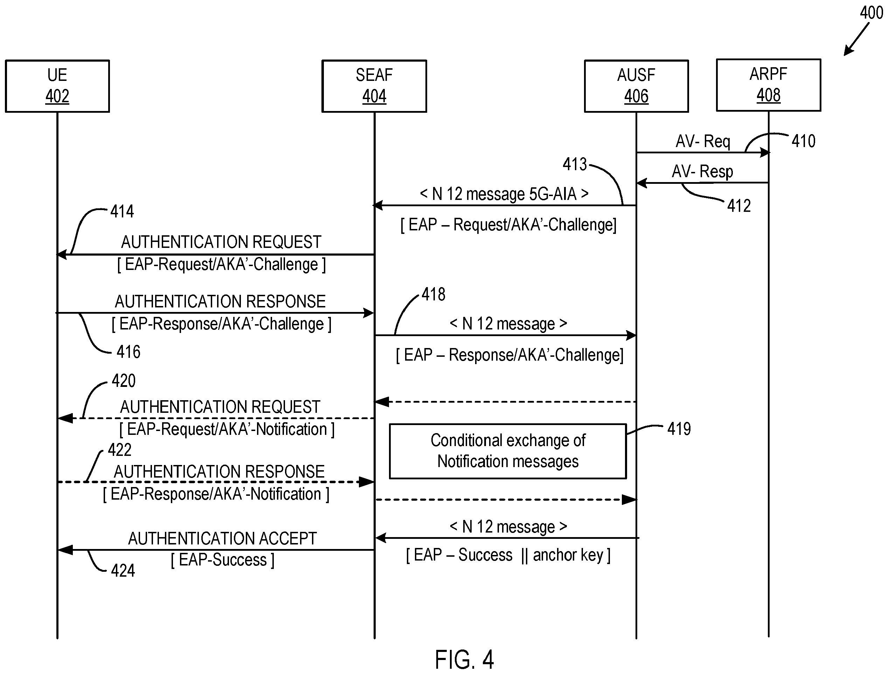

For example, FIG. 4 is a signal flow diagram illustrating an example EAP authentication and authorization procedure 400 according to one embodiment. The example EAP authentication and authorization procedure 400 is between a UE 401, an SEAF 404, an authentication server function (AUSF) 406, and an authentication credential repository and processing function (ARPF) 408. The AUSF 406 sends an AV request 410 to and receives an AV response 412 from the ARPF 408. The AUSF 406 sends an N12 message 5G-AIA 413 to the SEAF 404 including an EAP-request/AKA'-challenge. The SEAF 404 responds by sending a first authentication request 414 to the UE 402. The first authentication request 414 is a NAS signaling message that includes EAP-request/AKA'-challenge. The UE 402 sends a first authentication response 416 to the SEAF 404. The first authentication response 416 is a NAS signaling message that includes EAP-response/AKA'-challenge, which the SEAF 404 forwards to the AUSF 406 in an N12 message 418. In this example, the authentication and authorization procedure 400 further includes a conditional exchange of notification messages 419 wherein a second authentication request 420 carries an EAP-request/AKA'-notification and a second authentication response 422 carries an EAP-response/AKA'-notification.

Along with the use of multiple authentication request / authentication response messages, certain embodiments provide that, when the successful outcome of the EAP procedure is reached, the EAP-success type is provided to the UE 402 through an authentication accept message 424, as shown in FIG. 4. Thus, the EAP result (e.g., EAP-success or EAP-failure) may be sent within a dedicated NAS message (called authentication accept in FIG. 4, but may have other names such as "authentication result").

In some embodiments, the outcome of the main NAS enclosing procedure can be used to convey the successful EAP. Such embodiments may be used to address the re-authentication issues discussed previously.

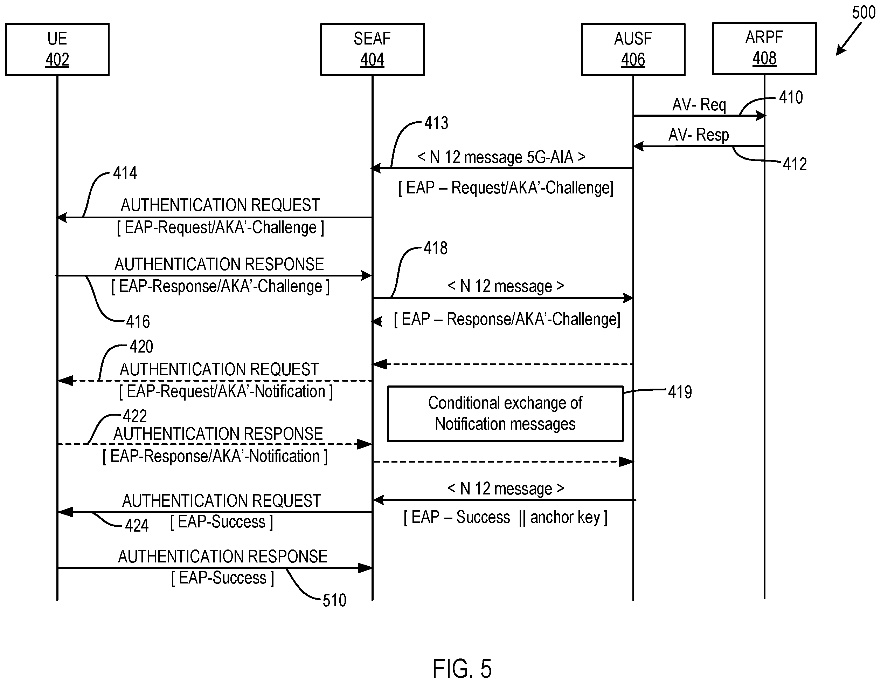

In some embodiments, the EAP-success can be conveyed through another exchange of authentication request/response messages, wherein the authentication response either carries the EAP-success type or does not carry any EAP signaling. It should be noted that this approach may provide the benefit that on the NW side, the NW received an awareness that the UE has received the indication of success and the NW can terminate the authentication process and any associated guard timers, safeguarding that the authentication procedure ends normally. FIG. 5 is a signal flow diagram illustrating an example EAP authentication and authorization procedure 500 according to one embodiment. The authentication and authorization procedure 500 is the same as the authentication and authorization procedure 400 shown in FIG. 4, but with the addition of a third authentication response 510 from the UE 402 to the SEAF 404 including the EAP-success type. An advantage of this alternative solution is that the NW may be able to use the third authentication response 510 to, for example, end the security procedure and stop guard timers.

### B(2) Pairs of SM authentication messages to transport EAP messages and EAP request types

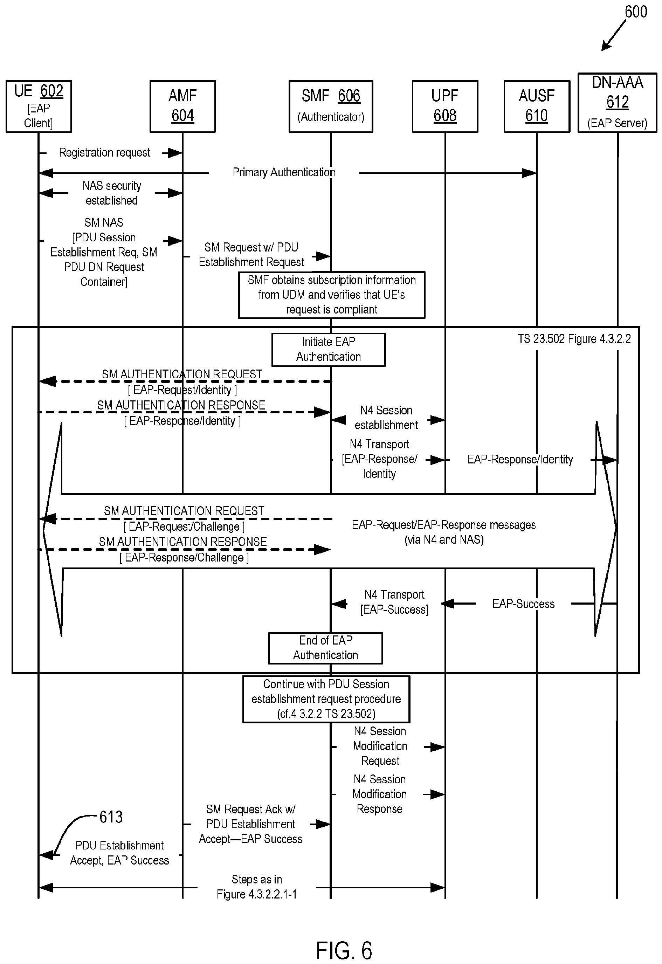

Another problem discussed previously concerns not the MM but the session management (SM). Here, to support the new 5GS security requirement to use EAP authentication and authorization, embodiments provide that within SM, there may be pairs of SM authentication messages to transport the EAP messages and EAP request types. Such SM transport messages can be considered as transparent to the SM itself, and within such SM transport/transparent message, the EAP message and EAP request type may be carried between the application client and the 3rd-party application server. An example procedure of such embodiments is illustrated by FIG. 6, which is a signal flow diagram illustrating an example procedure 600 according to certain embodiments. FIG. 6 shows a UE 602 (including an EAP client), an AMF 604, a session management function (SMF) 606 (acting as an authenticator), a user plane function (UPF) 608, an AUSF 610, and a data network authentication, authorization, and accounting (DN-AAA) server 612 (comprising an EAP server).

In the procedure 600 of FIG. 6, the names of such SM messages are nominally named "SM AUTHENTICATION REQUEST" and "SM AUTHENTICATION RESPONSE", however, any other chosen name for those messages may suffice. For instance, those messages could be named "SM_TRANSPORT", "PDU SESSION AUTHENTICATION/RESPONSE", and/or the like. In embodiments, these SM messages support the transfer of the EAP messages and EAP request types. There can be, however, as many of these two way SM handshake messages as is necessary to complete the EAP authentication and authorization procedure.

Note that in FIG. 6, in certain embodiments, an explicit NAS message or a handshake of messages to convey EAP-success is not necessary as the outcome of the main NAS initiating procedure is used to convey that successful outcome. See e.g., FIG. 6, PDU establishment accept 613, which carries EAP success 610. Such embodiments may be used to address the re-authentication issues discussed previously. The PDU establishment accept 613 carrying EAP-success is an example of sending the EAP result via the outcome of the main NAS enclosing procedure. Other examples of NAS enclosing procedure messages that may be used include, but are not limited to, PDU session establishment accept, PDU session establishment reject, and PDU session release command.

### B(3) Example re-authentication embodiments

Certain embodiments may be used to address the re-authentication issues discussed previously. Such re-authentication embodiments may use various embodiments discussed above (in any combination). For example, for the re-authentication for the primary case (e.g., at MM level), the re-authentication may allow for multiple handshakes of authentication request / authentication response carrying the EAP messages and EAP request types.

In the primary authentication case, as the re-authentication may in many use cases be part of some MM procedure (e.g., registration update), the resultant EAP-success can be provided back to the UE as part of that MM procedure. So if in a registration update procedure where re-authentication with EAP is to be performed, for example, when the registration update procedure ends with a registration accept message to the UE's MM, that message can carry the EAP-success.

To cover for when there is a need to convey the EAP-success but there is no convenient downlink (e.g., NW to UE) MM message to convey the EAP-Success, embodiments may include using a dedicated MM message to convey the EAP-success. An authentication accept is one such dedicated MM message, in various embodiments (although, in other embodiments, the dedicated message may have some other suitable name or may be conveyed in some other suitable dedicated MM message). In embodiments, the EAP-success may be used to end or terminate the re-authentication procedure.

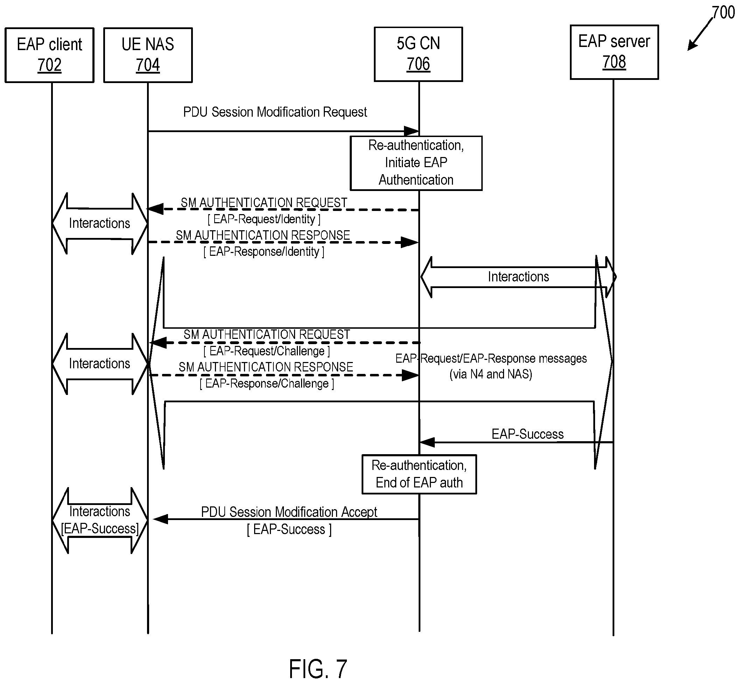

For the re-authentication for the secondary authentication case (e.g., SM level re-authentication of application client by 3rd-party application server), embodiments may allow for one or more (e.g., a series of) authentication request/response handshakes. Likewise, if the EAP-success needs to be conveyed and there is an underlying SM procedure, the end of that terminating SM procedure can be used to convey the EAP-success. One such underlying SM procedure can be PDU session modification procedure. For example, FIG. 7 is a signal flow diagram illustrating an example PDU modification procedure 700 according to one embodiment. FIG. 7 shows signaling and interactions between an EAP client 702 (e.g., in a UE), a UE NAS 704, a 5G core network (CN) 706, and an EAP server 708. As mentioned previously, the names of the particular messages are only illustrative and should not be construed to be limiting.

In some cases, there may be no underlying SM procedure to complete the EAP procedure. For example, it could be that the 3rd-party server has some updates (or it may be that the application client has been active for some time/days) and considers that whilst a UE/user/application client has previously been authenticated/ authorized, it is now necessary to re-authenticate that specific application client. For these scenarios, the embodiments herein may include: running a paging procedure if the UE is in IDLE mode, (e.g., registered but not connected to the 5G CN) to get the UE into CONNECTED mode; and running the re-authentication, wherein the re-authentication can be run at either the MM level or at the SM level.

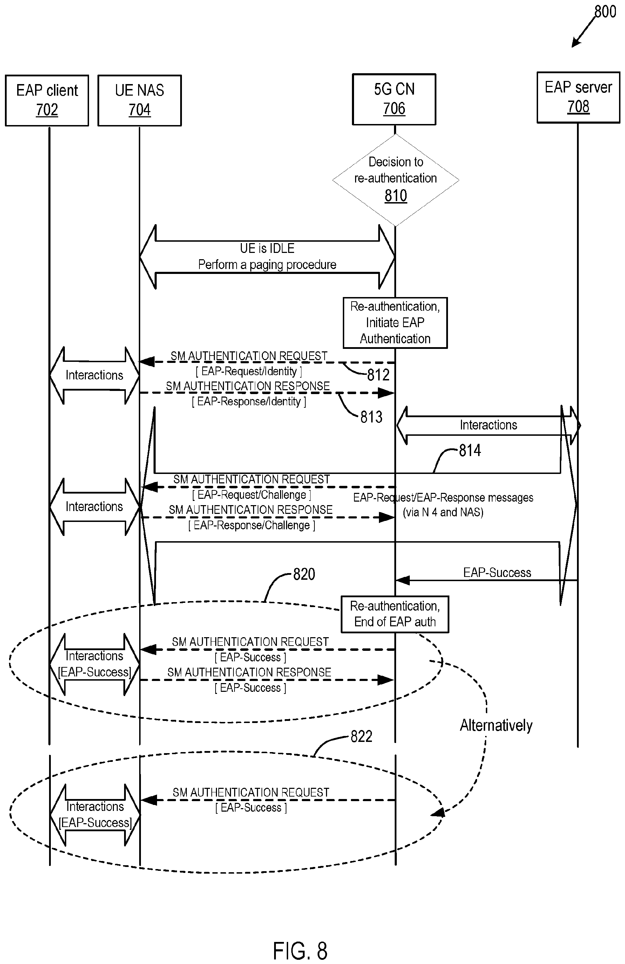

FIG. 8 is a signal flow diagram illustrating an example paging procedure 800 according to one embodiment. The paging procedure 800 may be kicked off or initiated due to a decision 810 to perform re-authentication when the UE is in the IDLE state. This example is related to secondary (SM-level) EAP authentication. Thus, as part of the procedure 800, the 5G CN sends an SM authentication request 812 including EAP-request/identity to the UE NAS 704 and the UE NAS 704 returns an SM authentication response 813 including an EAP-response/identity to the 5G CN 706. Further, EAP-request/EAP-response messages 814 may be exchanged between the EAP server 708 and the EAP client 702 via the 5G CN 706 and the UE NAS 704. FIG. 8 further provides an illustration of alternative procedures 820, 822 to provide the EAP-success to the UE's application client, should such a provision be required. In some embodiments, rather than handling of the EAP-success that the EAP server 708 may pass to the 5G CN 706, the EAP-success may not be provided to the UE, if such provision is considered unnecessary. As shown in FIG. 8, the EAP result (e.g., EAP-success or EAP-failure is sent within a dedicated NAS message (called SM authentication accept in FIG. 8, but may have other names such as "PDU session authentication result").

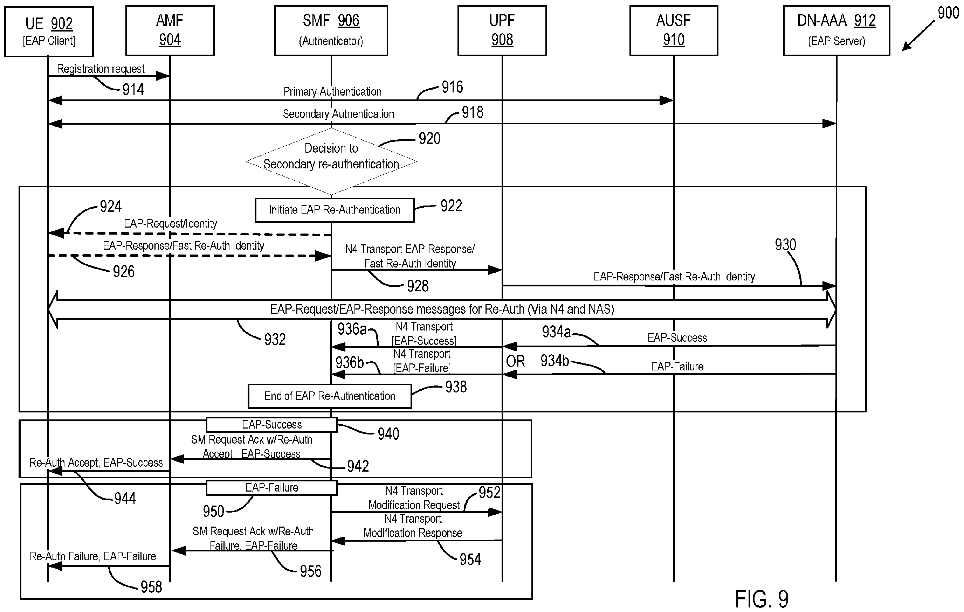

FIG. 9 is a signal flow diagram illustrating an example re-authentication procedure 900 according to certain embodiments. FIG. 9 shows a UE 902 (including an EAP client), an AMF 904, an SMF 906 (acting as an authenticator), a UPF 908, an AUSF 910, and a DN-AAA server 912 (comprising an EAP server). In the re-authentication procedure 900, the EAP client of the UE 902 sends a registration request 914 to the AMF 904. A primary authentication 916 has been established with the CN and a secondary authentication 918 has been established through initial authentication with the EAP server of the DN-AAA 912, which is external to the CN. The secondary re-authentication may either be initiated by the SMF 906 or the external DN/AAA server 912. If re-authentication is initiated by the SMF 906, the SMF 906 makes a decision 920 to perform secondary authentication and initiates 922 EAP re-authentication. If, however, re-authentication is initiated by the external DN-AAA server 912, the DN AAA server 912 decides to initiate secondary re-authentication, and the DN-AAA server 912 sends a secondary re-authentication request to the UPF 908, which the UFP 908 forwards to the SMF 906.

The SMF 906 sends an EAP-request/identity message 924 to the UE 902. The UE 902 respond with an EAP-response/identity message 926 (with fast reauthorization identity). The SMF 906 forwards the EAP-response/identity in an N4 interface transport message 928 to the UPF 908, selected during initial authentication. This establishes an end-to-end connection between the SMF 906 and the external DN-AAA server 912 for EAP exchange. In a message 930, the UPF 908 forwards the EAP response/identity message to the DN-AAA server 912. Then, the DN-AAA server 912 and the UE 902 may exchange EAP messages 932 as required by the particular EAP method.

After the completion of the authentication procedure, the DN-AAA server 912 either sends an EAP success message 934a or an EAP failure message 934b to the UPF 908, which forwards the respective EAP-success 936a or EAP-failure 936b over the N4 transport to the SMF 906. This ends 938 the re-authentication procedure at the SMF 906.

The procedure 900 shown in FIG. 9 also illustrates examples of success and failure cases being informed to the UE. For the EAP-success case 940, if the authorization is successful, EAP-success is sent to the UE 902 in an SM request acknowledgement with re-authorization accept message 942 from the SMF 906 to the AMF 904, wherein the AMF 904 forwards the re-authorization accept, EAP-success to the UE 902 in a message 944. For the EAP-failure case 950, if authorization is not successful, the SMF 906 notifies failure to UPF 908 in an N4 Transport modification request 952. Upon completion of a N4 session modification procedure with the selected UPF 908, as indicated by an N4 transport modification response 954, the SMF 906 sends EAP-failure to the AMF 904 in an SM request acknowledgement with re-authorization failure, EAP-failure, wherein the AMF 904 forwards the re-authorization failure, EAP-failure to the UE 902 in a message 958.

### B(4) Example transport/transfer of EAP-failure

Embodiments for the transport/transfer of the EAP-success are described and illustrated above. For the transport/transfer of the EAP-failure, the above embodiments related to carrying the EAP-success can equally work to carry the EAP-failure in the authentication request and/or authentication response messages. In some embodiments, the EAP-failure can also be part of the underlying MM or SM procedure. If there is no underlying MM or SM procedure, the NW may use explicit deregistration or PDU release procedures to convey the EAP failure. However, in case the EAP-failure is to be provided and a response is not needed, embodiments provide that the NW can provide such an EAP-failure within authentication_reject or sm_authentication_reject messages.

For cases wherein the EAP client determines not to continue with the EAP exchange, the failure indication from the EAP client to the underlying layer (e.g., the UE's NAS, or the UE's MM or the UE's SM entities/layers), certain embodiments herein provide that the UE's NAS may send, to the NW, an authentication_failure message or sm_authentication failure message, respectively.

The EAP result is sent via the outcome of the NAS enclosing procedure or main NAS enclosing procedure messages. Examples of suitable NAS enclosing procedure messages include registration accept, registration reject (also referred to as tracking area update reject), service request accept, service request reject.

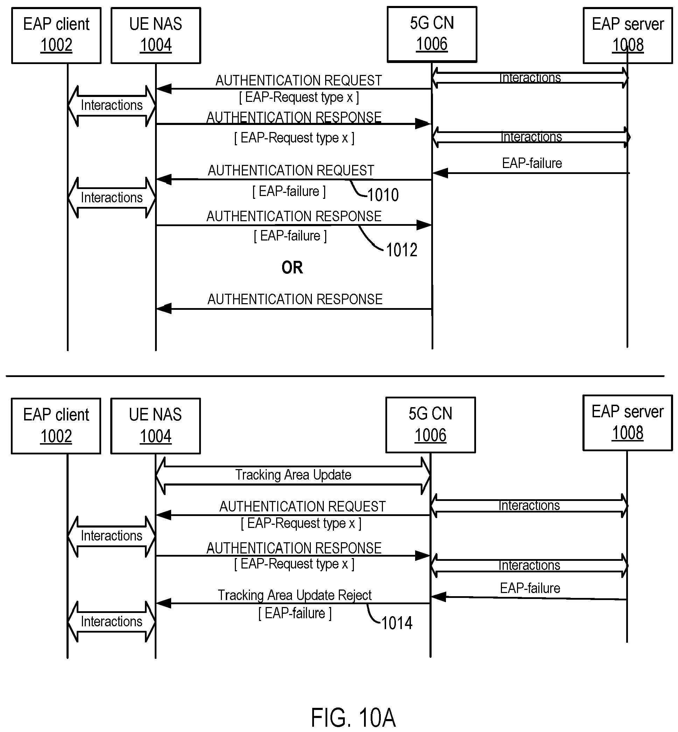

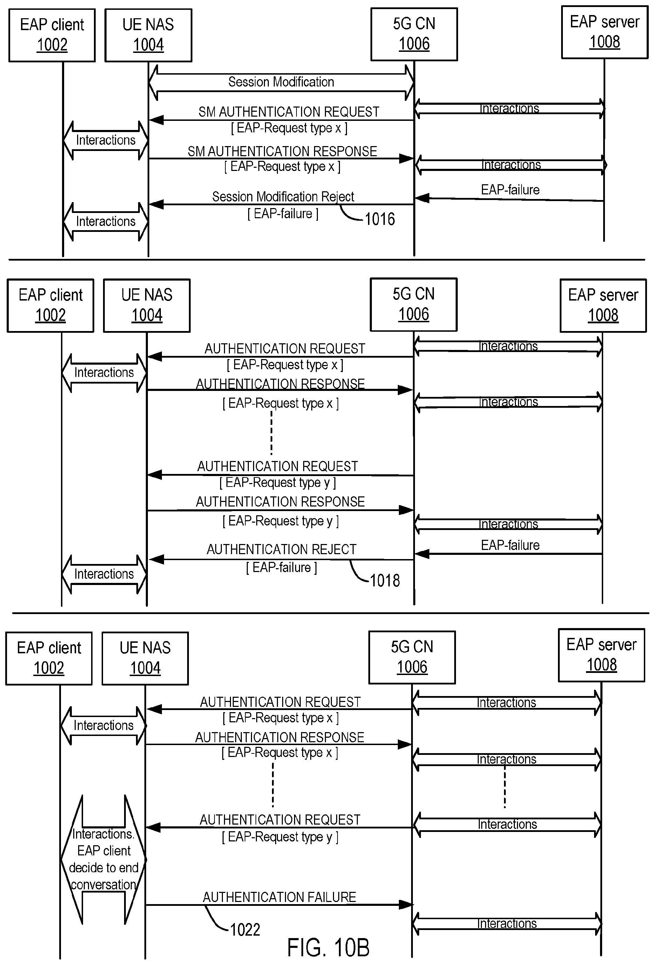

FIGS. 10A and 10B illustrate several signal flow diagrams of example EAP-failure sent via NAS enclosure procedure messages according to certain embodiments. The illustrated signaling and interactions are between an EAP client 1002 (e.g., in a UE), a UE NAS 1004, a 5G CN 1006, and an EAP server 1008. The names of the particular messages are only illustrative and should not be construed to be limiting. The examples shown in FIGS. 10A and 10B include EAP-failure carried by an authentication request message 1010, an authentication response message 1012, a tracking area update reject message 1014 (or a registration reject message in 5GS), a session modification reject message 1016, and an authentication reject message 1018. As indicated above, in certain embodiments, the UE NAS 1004 may send an authentication failure message 1022 (or an SM authentication failure message) to the 5G CN 1006.

### B(5) Additional Examples

The following are additional examples related to support of EAP authentication and authorization by 5G NAS.
Example 1B may include a method for defining what are the signaling messages exchanged between the UE and the NW to perform the authentication and authorization between the UE and NW, using the EAP-AKA protocol.
Example 2B may include the method of Example 1B and/or some other Examples herein, wherein the method is for communicating the EAP-Success and the EAP-failure between the UE and the NW, for the EAP-AKA procedure.
Example 3B may include the method of Examples 1B-2B and/or some other Examples herein, wherein the method is for defining how the primary authentications and secondary authentications are carried out for Mobility Management (MM) and Session Management (SM); respectively.
Example 4B may include the method of Examples 1B-3B and/or some other Examples herein, wherein the method is for defining how the re- authentications can be performed between the UE and the NW.
Example 5B may include the method of Examples 1B-5B and/or some other Examples herein, wherein the EAP protocol exchanges comprising of more than one handshake of EAP messages is supported by repeated use and exchange of underlying MM and SM exchange of messages.
Example 6B may include the method of Examples 1B-5B and/or some other Examples herein, wherein the EAP protocol is used by third party application server to authenticate and authorize application client over MM and SM, keeping such EAP methods transparent to the MM and SM.
Example 7B may include a user equipment (UE) cable to: receive an Authentication Message from a wireless network; and send an Authentication Message to a wireless network.
Example 8B may include the UE of Example 7B and/or some other Examples herein, wherein the UE is to receive multiple Primary (i.e. at MM level) AUTHENTICATION REQUEST from the network and sends multiple Primary AUTHENTICATION RESPONSE to the network.
Example 9B may include the UE of Example 7B and/or some other Examples herein, wherein the UE is to receive explicit or implicit Primary AUTHENTICATION ACCEPT or AUTHENTICATION FAILURE from the network and sends AUTHENTICATION FAILURE to the network.
Example 10B may include the UE of Example 7B and/or some other Examples herein, wherein the MM in NAS layer of this UE acts as the transport for the Primary EAP process and does not process the EAP request types or methods.
Example 11B may include the UE of Example 7B and/or some other Examples herein, wherein the UE receives multiple Secondary (i.e. SM level re-authentication of application client by third party application server) AUTHENTICATION REQUEST from the network and sends multiple Secondary AUTHENTICATION RESPONSE to the network.
Example 12B may include the UE of Example 7B and/or some other Examples herein, wherein the UE receives explicit or implicit Secondary AUTHENTICATION ACCEPT or AUTHENTICATION FAILURE from the network and sends AUTHENTICATION FAILURE to the network.
Example 13B may include the UE of Example 7B and/or some other Examples herein, wherein the SM in NAS layer acts as the transport for the Secondary EAP process and does not process the EAP request types or methods.
Example 14B may include the UE of Example 1B and/or some other Examples herein, wherein the UE able to handle primary or secondary Re-Authentication procedure.
Example 15B may include a wireless network capable to: receive an Authentication Message from user equipment (UE); and send an Authentication Message to user equipment (UE).
Example 16B may include the wireless network of Example 15 and/or some other Examples herein, wherein the wireless network sends multiple Primary (i.e. at MM level) AUTHENTICATION REQUEST to the UE and receives multiple Primary AUTHENTICATION RESPONSE from the UE.
Example 17B may include the wireless network of Example 15B and/or some other Examples herein, wherein the wireless network sends explicit or implicit Primary AUTHENTICATION ACCEPT or AUTHENTICATION FAILURE to the UE and receives AUTHENTICATION FAILURE from the UE.
Example 18B may include the wireless network of Example 15B and/or some other Examples herein, wherein the wireless network sends multiple Secondary (i.e. SM level re-authentication of application client by third party application server) AUTHENTICATION REQUEST to the UE and receives multiple Secondary AUTHENTICATION RESPONSE from the UE.
Example 19B may include the wireless network of Example 15B and/or some other Examples herein, wherein the wireless network sends explicit or implicit Secondary AUTHENTICATION ACCEPT or AUTHENTICATION FAILURE to the UE and receives AUTHENTICATION FAILURE from the UE.
Example 20B may include the wireless network of Example 15B and/or some other Examples herein, wherein the wireless network able to handle primary or secondary Re-Authentication procedure.
Example 21B may include an apparatus comprising means to perform one or more elements of a method described in or related to any of Examples 1B-20B, or any other method or process described herein.
Example 22B may include one or more non-transitory computer-readable media comprising instructions to cause an electronic device, upon execution of the instructions by one or more processors of the electronic device, to perform one or more elements of a method described in or related to any of Examples 1B-20B, or any other method or process described herein.
Example 23B may include an apparatus comprising logic, modules, or circuitry to perform one or more elements of a method described in or related to any of Examples 1B-20B, or any other method or process described herein.
Example 24B may include a method, technique, or process as described in or related to any of Examples 1B-20B, or portions or parts thereof.
Example 25B may include an apparatus comprising: one or more processors and one or more computer readable media comprising instructions that, when executed by the one or more processors, cause the one or more processors to perform the method, techniques, or process as described in or related to any of Examples 1B-20B, or portions thereof.
Example 26B may include a signal as described in or related to any of Examples 1B-20B, or portions or parts thereof.
Example 27B may include a signal in a wireless network as shown and described herein.
Example 28B may include a method of communicating in a wireless network as shown and described herein.
Example 29B may include a system for providing wireless communication as shown and described herein.
Example 30B may include a device for providing wireless communication as shown and described herein.

### C. Example Apparatus, Devices and Systems

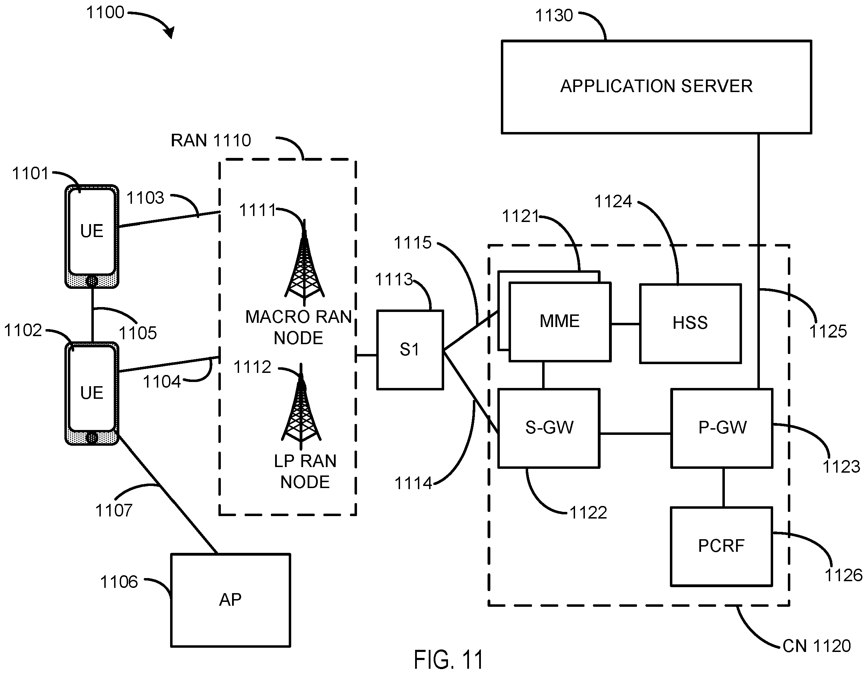

FIG. 11 illustrates an architecture of a system 1100 of a network in accordance with some embodiments. The system 1100 is shown to include a user equipment (UE) 1101 and a UE 1102. The UEs 1101 and 1102 are illustrated as smartphones (e.g., handheld touchscreen mobile computing devices connectable to one or more cellular networks), but may also comprise any mobile or non-mobile computing device, such as Personal Data Assistants (PDAs), pagers, laptop computers, desktop computers, wireless handsets, or any computing device including a wireless communications interface.

In some embodiments, any of the UEs 1101 and 1102 can comprise an Internet of Things (loT) UE, which can comprise a network access layer designed for low-power loT applications utilizing short-lived UE connections. An loT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or loT networks. The M2M or MTC exchange of data may be a machine-initiated exchange of data. An loT network describes interconnecting loT UEs, which may include uniquely identifiable embedded computing devices (within the Internet infrastructure), with short-lived connections. The loT UEs may execute background applications (e.g., keep-alive messages, status updates, etc.) to facilitate the connections of the loT network.

The UEs 1101 and 1102 may be configured to connect, e.g., communicatively couple, with a radio access network (RAN) 1110. The RAN 1110 may be, for example, an Evolved Universal Mobile Telecommunications System (UMTS) Terrestrial Radio Access Network (E-UTRAN), a NextGen RAN (NG RAN), or some other type of RAN. The UEs 1101 and 1102 utilize connections 1103 and 1104, respectively, each of which comprises a physical communications interface or layer (discussed in further detail below); in this example, the connections 1103 and 1104 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and the like.

In this embodiment, the UEs 1101 and 1102 may further directly exchange communication data via a ProSe interface 1105. The ProSe interface 1105 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 1102 is shown to be configured to access an access point (AP) 1106 via connection 1107. The connection 1107 can comprise a local wireless connection, such as a connection consistent with any IEEE 802.11 protocol, wherein the AP 1106 would comprise a wireless fidelity (WiFi®) router. In this example, the AP 1106 may be connected to the Internet without connecting to the core network of the wireless system (described in further detail below).

The RAN 1110 can include one or more access nodes that enable the connections 1103 and 1104. These access nodes (ANs) can be referred to as base stations (BSs), NodeBs, evolved NodeBs (eNBs), next Generation NodeBs (gNB), RAN nodes, and so forth, and can comprise ground stations (e.g., terrestrial access points) or satellite stations providing coverage within a geographic area (e.g., a cell). The RAN 1110 may include one or more RAN nodes for providing macrocells, e.g., macro RAN node 1111, and one or more RAN nodes for providing femtocells or picocells (e.g., cells having smaller coverage areas, smaller user capacity, or higher bandwidth compared to macrocells), e.g., low power (LP) RAN node 1112.

Any of the RAN nodes 1111 and 1112 can terminate the air interface protocol and can be the first point of contact for the UEs 1101 and 1102. In some embodiments, any of the RAN nodes 1111 and 1112 can fulfill various logical functions for the RAN 1110 including, but not limited to, radio network controller (RNC) functions such as radio bearer management, uplink and downlink dynamic radio resource management and data packet scheduling, and mobility management.

In accordance with some embodiments, the UEs 1101 and 1102 can be configured to communicate using Orthogonal Frequency-Division Multiplexing (OFDM) communication signals with each other or with any of the RAN nodes 1111 and 1112 over a multicarrier communication channel in accordance various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes 1111 and 1112 to the UEs 1101 and 1102, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

The physical downlink shared channel (PDSCH) may carry user data and higher-layer signaling to the UEs 1101 and 1102. The physical downlink control channel (PDCCH) may carry information about the transport format and resource allocations related to the PDSCH channel, among other things. It may also inform the UEs 1101 and 1102 about the transport format, resource allocation, and H-ARQ (Hybrid Automatic Repeat Request) information related to the uplink shared channel. Typically, downlink scheduling (assigning control and shared channel resource blocks to the UE 1102 within a cell) may be performed at any of the RAN nodes 1111 and 1112 based on channel quality information fed back from any of the UEs 1101 and 1102. The downlink resource assignment information may be sent on the PDCCH used for (e.g., assigned to) each of the UEs 1101 and 1102.

The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

Some embodiments may use concepts for resource allocation for control channel information that are an extension of the above-described concepts. For example, some embodiments may utilize an enhanced physical downlink control channel (EPDCCH) that uses PDSCH resources for control information transmission. The EPDCCH may be transmitted using one or more enhanced the control channel elements (ECCEs). Similar to above, each ECCE may correspond to nine sets of four physical resource elements known as enhanced resource element groups (EREGs). An ECCE may have other numbers of EREGs in some situations.

The RAN 1110 is shown to be communicatively coupled to a core network (CN) 1120 -via an S1 interface 1113. In embodiments, the CN 1120 may be an evolved packet core (EPC) network, a NextGen Packet Core (NPC) network, or some other type of CN. In this embodiment the S1 interface 1113 is split into two parts: the S1-U interface 1114, which carries traffic data between the RAN nodes 1111 and 1112 and a serving gateway (S-GW) 1122, and an S1-mobility management entity (MME) interface 1115, which is a signaling interface between the RAN nodes 1111 and 1112 and MMEs 1121.

In this embodiment, the CN 1120 comprises the MMEs 1121, the S-GW 1122, a Packet Data Network (PDN) Gateway (P-GW) 1123, and a home subscriber server (HSS) 1124. The MMEs 1121 may be similar in function to the control plane of legacy Serving General Packet Radio Service (GPRS) Support Nodes (SGSN). The MMEs 1121 may manage mobility aspects in access such as gateway selection and tracking area list management. The HSS 1124 may comprise a database for network users, including subscription-related information to support the network entities' handling of communication sessions. The CN 1120 may comprise one or several HSSs 1124, depending on the number of mobile subscribers, on the capacity of the equipment, on the organization of the network, etc. For example, the HSS 1124 can provide support for routing/roaming, authentication, authorization, naming/addressing resolution, location dependencies, etc.

The S-GW 1122 may terminate the S1 interface 1113 towards the RAN 1110, and routes data packets between the RAN 1110 and the CN 1120. In addition, the S-GW 1122 may be a local mobility anchor point for inter-RAN node handovers and also may provide an anchor for inter-3GPP mobility. Other responsibilities may include lawful intercept, charging, and some policy enforcement.

The P-GW 1123 may terminate an SGi interface toward a PDN. The P-GW 1123 may route data packets between the CN 1120 (e.g., an EPC network) and external networks such as a network including the application server 1130 (alternatively referred to as application function (AF)) via an Internet Protocol (IP) interface 1125. Generally, an application server 1130 may be an element offering applications that use IP bearer resources with the core network (e.g., UMTS Packet Services (PS) domain, LTE PS data services, etc.). In this embodiment, the P-GW 1123 is shown to be communicatively coupled to an application server 1130 via an IP communications interface 1125. The application server 1130 can also be configured to support one or more communication services (e.g., Voice-over-Internet Protocol (VoIP) sessions, PTT sessions, group communication sessions, social networking services, etc.) for the UEs 1101 and 1102 via the CN 1120.

The P-GW 1123 may further be a node for policy enforcement and charging data collection. A Policy and Charging Enforcement Function (PCRF) 1126 is the policy and charging control element of the CN 1120. In a non-roaming scenario, there may be a single PCRF in the Home Public Land Mobile Network (HPLMN) associated with a UE's Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 1126 may be communicatively coupled to the application server 1130 via the P-GW 1123. The application server 1130 may signal the PCRF 1126 to indicate a new service flow and select the appropriate Quality of Service (QoS) and charging parameters. The PCRF 1126 may provision this rule into a Policy and Charging Enforcement Function (PCEF) (not shown) with the appropriate traffic flow template (TFT) and QoS class of identifier (QCI), which commences the QoS and charging as specified by the application server 1130.

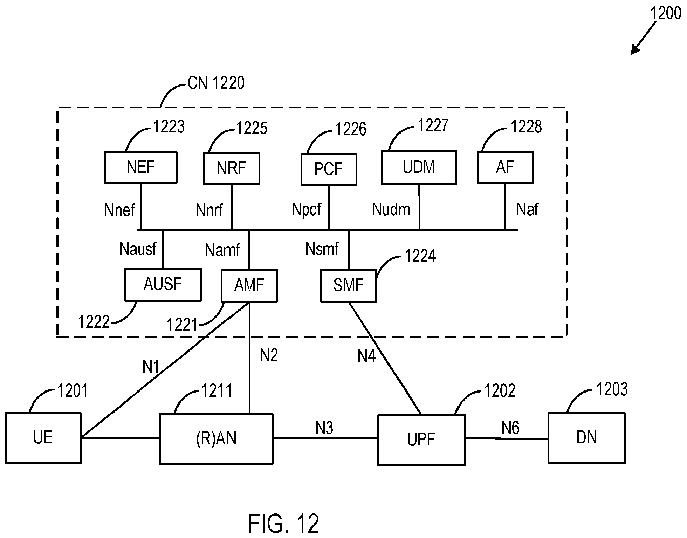

FIG. 12 illustrates an architecture of a system 1200 of a network in accordance with some embodiments. The system 1200 is shown to include a UE 1201, which may be the same or similar to UEs 1101 and 1102 discussed previously; a RAN node 1211, which may be the same or similar to RAN nodes 1111 and 1112 discussed previously; a User Plane Function (UPF) 1202; a Data network (DN) 1203, which may be, for example, operator services, Internet access or 3rd-party services; and a 5G Core Network (5GC or CN) 1220.

The CN 1220 may include an Authentication Server Function (AUSF) 1222; a Core Access and Mobility Management Function (AMF) 1221; a Session Management Function (SMF) 1224; a Network Exposure Function (NEF) 1223; a Policy Control function (PCF) 1226; a Network Function (NF) Repository Function (NRF) 1225; a Unified Data Management (UDM) 1227; and an Application Function (AF) 1228. The CN 1220 may also include other elements that are not shown, such as a Structured Data Storage network function (SDSF), an Unstructured Data Storage network function (UDSF), and the like.

The UPF 1202 may act as an anchor point for intra-RAT and inter-RAT mobility, an external PDU session point of interconnect to DN 1203, and a branching point to support multi-homed PDU session. The UPF 1202 may also perform packet routing and forwarding, packet inspection, enforce user plane part of policy rules, lawfully intercept packets (UP collection); traffic usage reporting, perform QoS handling for user plane (e.g., packet filtering, gating, UL/DL rate enforcement), perform Uplink Traffic verification (e.g., SDF to QoS flow mapping), transport level packet marking in the uplink and downlink, and downlink packet buffering and downlink data notification triggering. UPF 1202 may include an uplink classifier to support routing traffic flows to a data network. The DN 1203 may represent various network operator services, Internet access, or third party services. NY 1203 may include, or be similar to application server 1130 discussed previously.

The AUSF 1222 may store data for authentication of UE 1201 and handle authentication related functionality. Facilitates a common authentication framework for various access types.

The AMF 1221 may be responsible for registration management (e.g., for registering UE 1201, etc.), connection management, reachability management, mobility management, and lawful interception of AMF-related events, and access authentication and authorization. AMF 1221 may provide transport for SM messages between and SMF 1224, and act as a transparent proxy for routing SM messages. AMF 1221 may also provide transport for short message service (SMS) messages between UE 1201 and an SMS function (SMSF) (not shown by FIG. 12). AMF 1221 may act as Security Anchor Function (SEA), which may include interaction with the AUSF 1222 and the UE 1201, receipt of an intermediate key that was established as a result of the UE 1201 authentication process. Where USIM based authentication is used, the AMF 1221 may retrieve the security material from the AUSF 1222. AMF 1221 may also include a Security Context Management (SCM) function, which receives a key from the SEA that it uses to derive access-network specific keys. Furthermore, AMF 1221 may be a termination point of RAN CP interface (N2 reference point), a termination point of NAS (N1) signalling, and perform NAS ciphering and integrity protection.

AMF 1221 may also support NAS signalling with a UE 1201 over an N3 interworking-function (IWF) interface. The N3IWF may be used to provide access to untrusted entities. N33IWF may be a termination point for the N2 and N3 interfaces for control plane and user plane, respectively, and as such, may handle N2 signalling from SMF and AMF for PDU sessions and QoS, encapsulate/de-encapsulate packets for IPSec and N3 tunnelling, mark N3 user-plane packets in the uplink, and enforce QoS corresponding to N3 packet marking taking into account QoS requirements associated to such marking received over N2. N3IWF may also relay uplink and downlink control-plane NAS (N1) signalling between the UE 1201 and AMF 1221, and relay uplink and downlink user-plane packets between the UE 1201 and UPF 1202. The N3IWF also provides mechanisms for IPsec tunnel establishment with the UE 1201.

The SMF 1224 may be responsible for session management (e.g., session establishment, modify and release, including tunnel maintain between UPF and AN node); UE IP address allocation & management (including optional Authorization); Selection and control of UP function; Configures traffic steering at UPF to route traffic to proper destination; termination of interfaces towards Policy control functions; control part of policy enforcement and QoS; lawful intercept (for SM events and interface to LI System); termination of SM parts of NAS messages; downlink Data Notification; initiator of AN specific SM information, sent via AMF over N2 to AN; determine SSC mode of a session. The SMF 1224 may include the following roaming functionality: handle local enforcement to apply QoS SLAs (VPLMN); charging data collection and charging interface (VPLMN); lawful intercept (in VPLMN for SM events and interface to LI System); support for interaction with external DN for transport of signalling for PDU session authorization/authentication by external DN.

The NEF 1223 may provide means for securely exposing the services and capabilities provided by 3GPP network functions for third party, internal exposure/re-exposure, Application Functions (e.g., AF 1228), edge computing or fog computing systems, etc. In such embodiments, the NEF 1223 may authenticate, authorize, and/or throttle the AFs. NEF 1223 may also translate information exchanged with the AF 1228and information exchanged with internal network functions. For example, the NEF 1223 may translate between an AF-Service-ldentifier and an internal 5GC information. NEF 1223 may also receive information from other network functions (NFs) based on exposed capabilities of other network functions. This information may be stored at the NEF 1223 as structured data, or at a data storage NF using a standardized interfaces. The stored information can then be re-exposed by the NEF 1223 to other NFs and AFs, and/or used for other purposes such as analytics.

The NRF 1225 may support service discovery functions, receive NF Discovery Requests from NF instances, and provide the information of the discovered NF instances to the NF instances. NRF 1225 also maintains information of available NF instances and their supported services.

The PCF 1226 may provide policy rules to control plane function(s) to enforce them, and may also support unified policy framework to govern network behaviour. The PCF 1226 may also implement a front end (FE) to access subscription information relevant for policy decisions in a UDR of UDM 1227.

The UDM 1227 may handle subscription-related information to support the network entities' handling of communication sessions, and may store subscription data of UE 1201. The UDM 1227 may include two parts, an application FE and a User Data Repository (UDR). The UDM may include a UDM FE, which is in charge of processing of credentials, location management, subscription management and so on. Several different front ends may serve the same user in different transactions. The UDM-FE accesses subscription information stored in the UDR and performs authentication credential processing; user identification handling; access authorization; registration/mobility management; and subscription management. The UDR may interact with PCF 1226. UDM 1227 may also support SMS management, wherein an SMS-FE implements the similar application logic as discussed previously.

The AF 1228 may provide application influence on traffic routing, access to the Network Capability Exposure (NCE), and interact with the policy framework for policy control. The NCE may be a mechanism that allows the 5GC and AF 1228 to provide information to each other via NEF 1223, which may be used for edge computing implementations. In such implementations, the network operator and third party services may be hosted close to the UE 1201 access point of attachment to achieve an efficient service delivery through the reduced end-to-end latency and load on the transport network. For edge computing implementations, the 5GC may select a UPF 1202 close to the UE 1201 and execute traffic steering from the UPF 1202 to DN 1203 via the N6 interface. This may be based on the UE subscription data, UE location, and information provided by the AF 1228. In this way, the AF 1228 may influence UPF (re)selection and traffic routing. Based on operator deployment, when AF 1228 is considered to be a trusted entity, the network operator may permit AF 1228 to interact directly with relevant NFs.

As discussed previously, the CN 1220 may include an SMSF, which may be responsible for SMS subscription checking and verification, and relaying SM messages to/from the UE 1201 to/from other entities, such as an SMS-GMSC/IWMSC/SMS-router. The SMS may also interact with AMF 1221 and UDM 1227 for notification procedure that the UE 1201 is available for SMS transfer (e.g., set a UE not reachable flag, and notifying UDM 1227 when UE 1201 is available for SMS).

The system 1200 may include the following service-based interfaces: Namf: Service-based interface exhibited by AMF; Nsmf: Service-based interface exhibited by SMF; Nnef: Service-based interface exhibited by NEF; Npcf: Service-based interface exhibited by PCF; Nudm: Service-based interface exhibited by UDM; Naf: Service-based interface exhibited by AF; Nnrf: Service-based interface exhibited by NRF; and Nausf: Service-based interface exhibited by AUSF.

The system 1200 may include the following reference points: N1: Reference point between the UE and the AMF; N2: Reference point between the (R)AN and the AMF; N3: Reference point between the (R)AN and the UPF; N4: Reference point between the SMF and the UPF; and N6: Reference point between the UPF and a Data Network. There may be many more reference points and/or service-based interfaces between the NF services in the NFs, however, these interfaces and reference points have been omitted for clarity. For example, an N5 reference point may be between the PCF and the AF; an N7 reference point may be between the PCF and the SMF; an N11 reference point between the AMF and SMF; etc. In some embodiments, the CN 1220 may include an Nx interface, which is an inter-CN interface between the MME (e.g., MME 1121) and the AMF 1221 in order to enable interworking between CN 1220 and CN 1120.

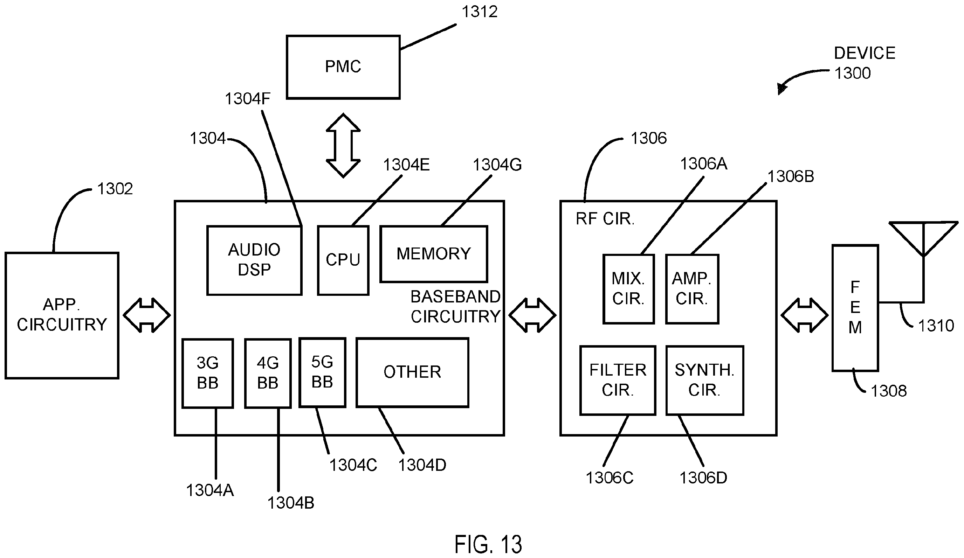

FIG. 13 illustrates example components of a device 1300 in accordance with some embodiments. In some embodiments, the device 1300 may include application circuitry 1302, baseband circuitry 1304, Radio Frequency (RF) circuitry 1306, front-end module (FEM) circuitry 1308, one or more antennas 1310, and power management circuitry (PMC) 1312 coupled together at least as shown. The components of the illustrated device 1300 may be included in a UE or a RAN node. In some embodiments, the device 1300 may include fewer elements (e.g., a RAN node may not utilize application circuitry 1302, and instead include a processor/controller to process IP data received from an EPC). In some embodiments, the device 1300 may include additional elements such as, for example, memory/storage, display, camera, sensor, or input/output (I/O) interface. In other embodiments, the components described below may be included in more than one device (e.g., said circuitries may be separately included in more than one device for Cloud-RAN (C-RAN) implementations).

The application circuitry 1302 may include one or more application processors. For example, the application circuitry 1302 may include circuitry such as, but not limited to, one or more single-core or multi-core processors. The processor(s) may include any combination of general-purpose processors and dedicated processors (e.g., graphics processors, application processors, etc.). The processors may be coupled with or may include memory/storage and may be configured to execute instructions stored in the memory/storage to enable various applications or operating systems to run on the device 1300. In some embodiments, processors of application circuitry 1302 may process IP data packets received from an EPC.

The baseband circuitry 1304 may include circuitry such as, but not limited to, one or more single-core or multi-core processors. The baseband circuitry 1304 may include one or more baseband processors or control logic to process baseband signals received from a receive signal path of the RF circuitry 1306 and to generate baseband signals for a transmit signal path of the RF circuitry 1306. Baseband processing circuity 1304 may interface with the application circuitry 1302 for generation and processing of the baseband signals and for controlling operations of the RF circuitry 1306. For example, in some embodiments, the baseband circuitry 1304 may include a third generation (3G) baseband processor 1304A, a fourth generation (4G) baseband processor 1304B, a fifth generation (5G) baseband processor 1304C, or other baseband processor(s) 1304D for other existing generations, generations in development or to be developed in the future (e.g., second generation (2G), sixth generation (6G), etc.). The baseband circuitry 1304 (e.g., one or more of baseband processors 1304A-D) may handle various radio control functions that enable communication with one or more radio networks via the RF circuitry 1306. In other embodiments, some or all of the functionality of baseband processors 1304A-D may be included in modules stored in the memory 1304G and executed via a Central Processing Unit (CPU) 1304E. The radio control functions may include, but are not limited to, signal modulation/demodulation, encoding/decoding, radio frequency shifting, etc. In some embodiments, modulation/demodulation circuitry of the baseband circuitry 1304 may include Fast-Fourier Transform (FFT), precoding, or constellation mapping/demapping functionality. In some embodiments, encoding/decoding circuitry of the baseband circuitry 1304 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 1304 may include one or more audio digital signal processor(s) (DSP) 1304F. The audio DSP(s) 1304F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 1304 and the application circuitry 1302 may be implemented together such as, for example, on a system on a chip (SOC).

In some embodiments, the baseband circuitry 1304 may provide for communication compatible with one or more radio technologies. For example, in some embodiments, the baseband circuitry 1304 may support communication with an evolved universal terrestrial radio access network (EUTRAN) or other wireless metropolitan area networks (WMAN), a wireless local area network (WLAN), or a wireless personal area network (WPAN). Embodiments in which the baseband circuitry 1304 is configured to support radio communications of more than one wireless protocol may be referred to as multi-mode baseband circuitry.

RF circuitry 1306 may enable communication with wireless networks using modulated electromagnetic radiation through a non-solid medium. In various embodiments, the RF circuitry 1306 may include switches, filters, amplifiers, etc. to facilitate the communication with the wireless network. The RF circuitry 1306 may include a receive signal path which may include circuitry to down-convert RF signals received from the FEM circuitry 1308 and provide baseband signals to the baseband circuitry 1304. RF circuitry 1306 may also include a transmit signal path which may include circuitry to up-convert baseband signals provided by the baseband circuitry 1304 and provide RF output signals to the FEM circuitry 1308 for transmission.

In some embodiments, the receive signal path of the RF circuitry 1306 may include mixer circuitry 1306A, amplifier circuitry 1306B and filter circuitry 1306C. In some embodiments, the transmit signal path of the RF circuitry 1306 may include filter circuitry 1306C and mixer circuitry 1306A. RF circuitry 1306 may also include synthesizer circuitry 1306D for synthesizing a frequency for use by the mixer circuitry 1306A of the receive signal path and the transmit signal path. In some embodiments, the mixer circuitry 1306A of the receive signal path may be configured to down-convert RF signals received from the FEM circuitry 1308 based on the synthesized frequency provided by synthesizer circuitry 1306D. The amplifier circuitry 1306B may be configured to amplify the down-converted signals and the filter circuitry 1306C may be a low-pass filter (LPF) or band-pass filter (BPF) configured to remove unwanted signals from the down-converted signals to generate output baseband signals. Output baseband signals may be provided to the baseband circuitry 1304 for further processing. In some embodiments, the output baseband signals may be zero-frequency baseband signals, although this is not a requirement. In some embodiments, the mixer circuitry 1306A of the receive signal path may comprise passive mixers, although the scope of the embodiments is not limited in this respect.

In some embodiments, the mixer circuitry 1306A of the transmit signal path may be configured to up-convert input baseband signals based on the synthesized frequency provided by the synthesizer circuitry 1306D to generate RF output signals for the FEM circuitry 1308. The baseband signals may be provided by the baseband circuitry 1304 and may be filtered by the filter circuitry 1306C.

In some embodiments, the mixer circuitry 1306A of the receive signal path and the mixer circuitry 1306A of the transmit signal path may include two or more mixers and may be arranged for quadrature downconversion and upconversion, respectively. In some embodiments, the mixer circuitry 1306A of the receive signal path and the mixer circuitry 1306A of the transmit signal path may include two or more mixers and may be arranged for image rejection (e.g., Hartley image rejection). In some embodiments, the mixer circuitry 1306A of the receive signal path and the mixer circuitry 1306A may be arranged for direct downconversion and direct upconversion, respectively. In some embodiments, the mixer circuitry 1306A of the receive signal path and the mixer circuitry 1306A of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 1306 may include analog-to-digital converter (ADC) and digital-to-analog converter (DAC) circuitry and the baseband circuitry 1304 may include a digital baseband interface to communicate with the RF circuitry 1306.

In some dual-mode embodiments, a separate radio IC circuitry may be provided for processing signals for each spectrum, although the scope of the embodiments is not limited in this respect.

In some embodiments, the synthesizer circuitry 1306D may be a fractional-N synthesizer or a fractional N/N+1 synthesizer, although the scope of the embodiments is not limited in this respect as other types of frequency synthesizers may be suitable. For example, synthesizer circuitry 1306D may be a delta-sigma synthesizer, a frequency multiplier, or a synthesizer comprising a phase-locked loop with a frequency divider.

The synthesizer circuitry 1306D may be configured to synthesize an output frequency for use by the mixer circuitry 1306A of the RF circuitry 1306 based on a frequency input and a divider control input. In some embodiments, the synthesizer circuitry 1306D may be a fractional N/N+1 synthesizer.

In some embodiments, frequency input may be provided by a voltage controlled oscillator (VCO), although that is not a requirement. Divider control input may be provided by either the baseband circuitry 1304 or the application circuitry 1302 (such as an applications processor) depending on the desired output frequency. In some embodiments, a divider control input (e.g., N) may be determined from a look-up table based on a channel indicated by the application circuitry 1302.

Synthesizer circuitry 1306D of the RF circuitry 1306 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, the synthesizer circuitry 1306D may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 1306 may include an IQ/polar converter.

FEM circuitry 1308 may include a receive signal path which may include circuitry configured to operate on RF signals received from one or more antennas 1310, amplify the received signals and provide the amplified versions of the received signals to the RF circuitry 1306 for further processing. The FEM circuitry 1308 may also include a transmit signal path which may include circuitry configured to amplify signals for transmission provided by the RF circuitry 1306 for transmission by one or more of the one or more antennas 1310. In various embodiments, the amplification through the transmit or receive signal paths may be done solely in the RF circuitry 1306, solely in the FEM circuitry 1308, or in both the RF circuitry 1306 and the FEM circuitry 1308.

In some embodiments, the FEM circuitry 1308 may include a TX/RX switch to switch between transmit mode and receive mode operation. The FEM circuitry 1308 may include a receive signal path and a transmit signal path. The receive signal path of the FEM circuitry 1308 may include an LNA to amplify received RF signals and provide the amplified received RF signals as an output (e.g., to the RF circuitry 1306). The transmit signal path of the FEM circuitry 1308 may include a power amplifier (PA) to amplify input RF signals (e.g., provided by the RF circuitry 1306), and one or more filters to generate RF signals for subsequent transmission (e.g., by one or more of the one or more antennas 1310).

In some embodiments, the PMC 1312 may manage power provided to the baseband circuitry 1304. In particular, the PMC 1312 may control power-source selection, voltage scaling, battery charging, or DC-to-DC conversion. The PMC 1312 may often be included when the device 1300 is capable of being powered by a battery, for example, when the device 1300 is included in a UE. The PMC 1312 may increase the power conversion efficiency while providing desirable implementation size and heat dissipation characteristics.

FIG. 13 shows the PMC 1312 coupled only with the baseband circuitry 1304. However, in other embodiments, the PMC 1312 may be additionally or alternatively coupled with, and perform similar power management operations for, other components such as, but not limited to, the application circuitry 1302, the RF circuitry 1306, or the FEM circuitry 1308.

In some embodiments, the PMC 1312 may control, or otherwise be part of, various power saving mechanisms of the device 1300. For example, if the device 1300 is in an RRC_Connected state, where it is still connected to the RAN node as it expects to receive traffic shortly, then it may enter a state known as Discontinuous Reception Mode (DRX) after a period of inactivity. During this state, the device 1300 may power down for brief intervals of time and thus save power.

If there is no data traffic activity for an extended period of time, then the device 1300 may transition off to an RRC_Idle state, where it disconnects from the network and does not perform operations such as channel quality feedback, handover, etc. The device 1300 goes into a very low power state and it performs paging where again it periodically wakes up to listen to the network and then powers down again. The device 1300 may not receive data in this state, and in order to receive data, it transitions back to an RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 1302 and processors of the baseband circuitry 1304 may be used to execute elements of one or more instances of a protocol stack. For example, processors of the baseband circuitry 1304, alone or in combination, may be used to execute Layer 3, Layer 2, or Layer 1 functionality, while processors of the application circuitry 1302 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

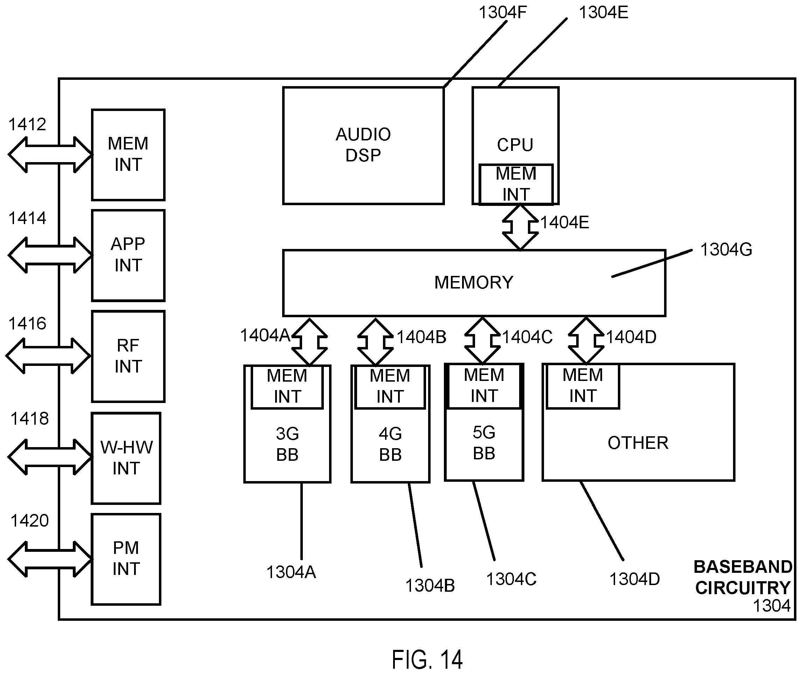

FIG. 14 illustrates example interfaces of baseband circuitry in accordance with some embodiments. As discussed above, the baseband circuitry 1304 of FIG. 13 may comprise processors 1304A-1304E and a memory 1304G utilized by said processors. Each of the processors 1304A-1304E may include a memory interface, 1404A-1404E, respectively, to send/receive data to/from the memory 1304G.

The baseband circuitry 1304 may further include one or more interfaces to communicatively couple to other circuitries/devices, such as a memory interface 1412 (e.g., an interface to send/receive data to/from memory external to the baseband circuitry 1304), an application circuitry interface 1414 (e.g., an interface to send/receive data to/from the application circuitry 1302 of FIG. 13), an RF circuitry interface 1416 (e.g., an interface to send/receive data to/from RF circuitry 1306 of FIG. 13), a wireless hardware connectivity interface 1418 (e.g., an interface to send/receive data to/from Near Field Communication (NFC) components, Bluetooth® components (e.g., Bluetooth® Low Energy), Wi-Fi® components, and other communication components), and a power management interface 1420 (e.g., an interface to send/receive power or control signals to/from the PMC 1312.

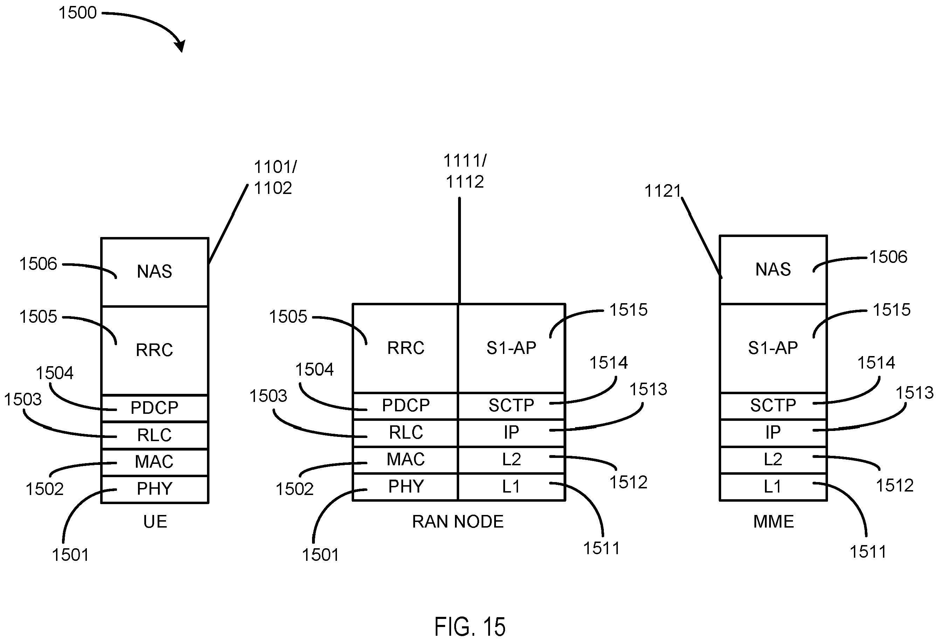

FIG. 15 is an illustration of a control plane protocol stack in accordance with some embodiments. In this embodiment, a control plane 1500 is shown as a communications protocol stack between the UE 1101 (or alternatively, the UE 1102), the RAN node 1111 (or alternatively, the RAN node 1112), and the MME 1121.

A PHY layer 1501 may transmit or receive information used by the MAC layer 1502 over one or more air interfaces. The PHY layer 1501 may further perform link adaptation or adaptive modulation and coding (AMC), power control, cell search (e.g., for initial synchronization and handover purposes), and other measurements used by higher layers, such as an RRC layer 1505. The PHY layer 1501 may still further perform error detection on the transport channels, forward error correction (FEC) coding/decoding of the transport channels, modulation/demodulation of physical channels, interleaving, rate matching, mapping onto physical channels, and Multiple Input Multiple Output (MIMO) antenna processing.

The MAC layer 1502 may perform mapping between logical channels and transport channels, multiplexing of MAC service data units (SDUs) from one or more logical channels onto transport blocks (TB) to be delivered to PHY via transport channels, demultiplexing MAC SDUs to one or more logical channels from transport blocks (TB) delivered from the PHY via transport channels, multiplexing MAC SDUs onto TBs, scheduling information reporting, error correction through hybrid automatic repeat request (HARQ), and logical channel prioritization.

An RLC layer 1503 may operate in a plurality of modes of operation, including: Transparent Mode (TM), Unacknowledged Mode (UM), and Acknowledged Mode (AM). The RLC layer 1503 may execute transfer of upper layer protocol data units (PDUs), error correction through automatic repeat request (ARQ) for AM data transfers, and concatenation, segmentation and reassembly of RLC SDUs for UM and AM data transfers. The RLC layer 1503 may also execute re-segmentation of RLC data PDUs for AM data transfers, reorder RLC data PDUs for UM and AM data transfers, detect duplicate data for UM and AM data transfers, discard RLC SDUs for UM and AM data transfers, detect protocol errors for AM data transfers, and perform RLC re-establishment.

A PDCP layer 1504 may execute header compression and decompression of IP data, maintain PDCP Sequence Numbers (SNs), perform in-sequence delivery of upper layer PDUs at re-establishment of lower layers, eliminate duplicates of lower layer SDUs at re-establishment of lower layers for radio bearers mapped on RLC AM, cipher and decipher control plane data, perform integrity protection and integrity verification of control plane data, control timer-based discard of data, and perform security operations (e.g., ciphering, deciphering, integrity protection, integrity verification, etc.).

The main services and functions of the RRC layer 1505 may include broadcast of system information (e.g., included in Master Information Blocks (MIBs) or System Information Blocks (SIBs) related to the non-access stratum (NAS)), broadcast of system information related to the access stratum (AS), paging, establishment, maintenance and release of an RRC connection between the UE and E-UTRAN (e.g., RRC connection paging, RRC connection establishment, RRC connection modification, and RRC connection release), establishment, configuration, maintenance and release of point-to-point radio bearers, security functions including key management, inter radio access technology (RAT) mobility, and measurement configuration for UE measurement reporting. Said MIBs and SIBs may comprise one or more information elements (lEs), which may each comprise individual data fields or data structures.

The UE 1101 and the RAN node 1111 may utilize a Uu interface (e.g., an LTE-Uu interface) to exchange control plane data via a protocol stack comprising the PHY layer 1501, the MAC layer 1502, the RLC layer 1503, the PDCP layer 1504, and the RRC layer 1505.

In the embodiment shown, the non-access stratum (NAS) protocols 1506 form the highest stratum of the control plane between the UE 1101 and the MME 1121. The NAS protocols 1506 support the mobility of the UE 1101 and the session management procedures to establish and maintain IP connectivity between the UE 1101 and the P-GW 1123.

The S1 Application Protocol (S1-AP) layer 1515 may support the functions of the S1 interface and comprise Elementary Procedures (EPs). An EP is a unit of interaction between the RAN node 1111 and the CN 1120. The S1-AP layer services may comprise two groups: UE-associated services and non UE-associated services. These services perform functions including, but not limited to: E-UTRAN Radio Access Bearer (E-RAB) management, UE capability indication, mobility, NAS signaling transport, RAN Information Management (RIM), and configuration transfer.

The Stream Control Transmission Protocol (SCTP) layer (alternatively referred to as the stream control transmission protocol/internet protocol (SCTP/IP) layer) 1514 may ensure reliable delivery of signaling messages between the RAN node 1111 and the MME 1121 based, in part, on the IP protocol, supported by an IP layer 1513. An L2 layer 1512 and an L1 layer 1511 may refer to communication links (e.g., wired or wireless) used by the RAN node and the MME to exchange information.

The RAN node 1111 and the MME 1121 may utilize an S1-MME interface to exchange control plane data via a protocol stack comprising the L1 layer 1511, the L2 layer 1512, the IP layer 1513, the SCTP layer 1514, and the S1-AP layer 1515.

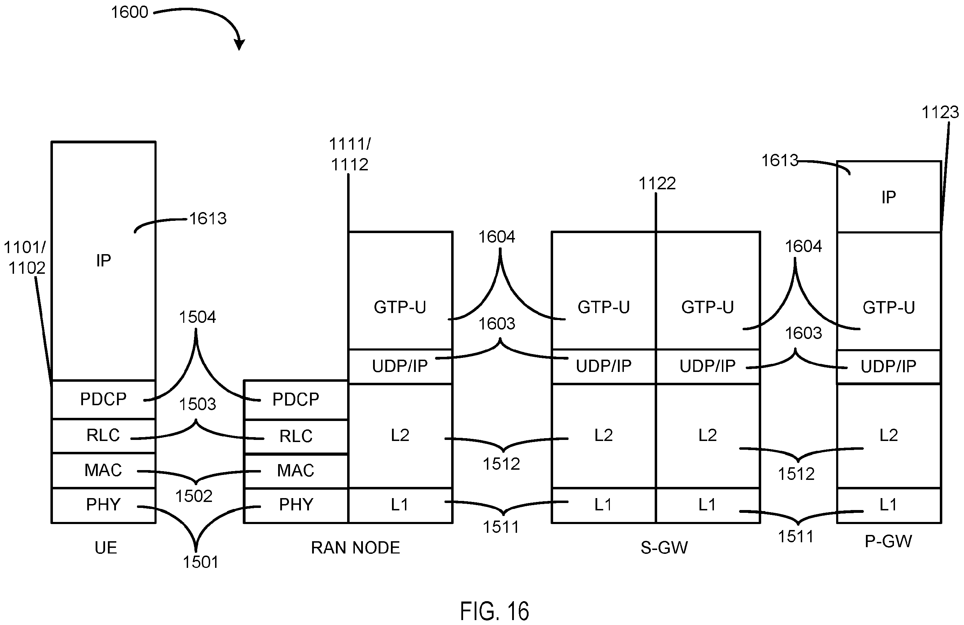

FIG. 16 is an illustration of a user plane protocol stack in accordance with some embodiments. In this embodiment, a user plane 1600 is shown as a communications protocol stack between the UE 1101 (or alternatively, the UE 1102), the RAN node 1111 (or alternatively, the RAN node 1112), the S-GW 1122, and the P-GW 1123. The user plane 1600 may utilize at least some of the same protocol layers as the control plane 1500. For example, the UE 1101 and the RAN node 1111 may utilize a Uu interface (e.g., an LTE-Uu interface) to exchange user plane data via a protocol stack comprising the PHY layer 1501, the MAC layer 1502, the RLC layer 1503, the PDCP layer 1504.

The General Packet Radio Service (GPRS) Tunneling Protocol for the user plane (GTP-U) layer 1604 may be used for carrying user data within the GPRS core network and between the radio access network and the core network. The user data transported can be packets in any of IPv4, IPv6, or PPP formats, for example. The UDP and IP security (UDP/IP) layer 1603 may provide checksums for data integrity, port numbers for addressing different functions at the source and destination, and encryption and authentication on the selected data flows. The RAN node 1111 and the S-GW 1122 may utilize an S1-U interface to exchange user plane data via a protocol stack comprising the L1 layer 1511, the L2 layer 1512, the UDP/IP layer 1603, and the GTP-U layer 1604. The S-GW 1122 and the P-GW 1123 may utilize an S5/S8a interface to exchange user plane data via a protocol stack comprising the L1 layer 1511, the L2 layer 1512, the UDP/IP layer 1603, and the GTP-U layer 1604. As discussed above with respect to FIG. 15, NAS protocols support the mobility of the UE 1101 and the session management procedures to establish and maintain IP connectivity between the UE 1101 and the P-GW 1123.

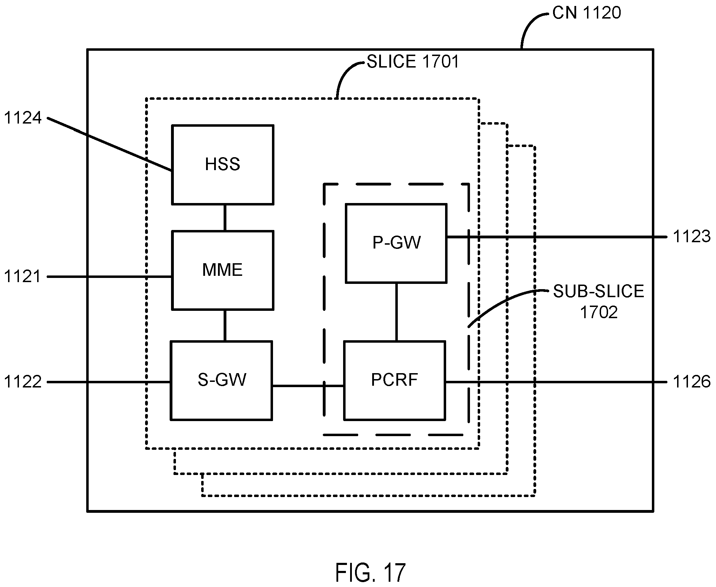

FIG. 17 illustrates components of a core network in accordance with some embodiments. The components of the CN 1120 may be implemented in one physical node or separate physical nodes including components to read and execute instructions from a machine-readable or computer-readable medium (e.g., a non-transitory machine-readable storage medium). In some embodiments, Network Functions Virtualization (NFV) is utilized to virtualize any or all of the above described network node functions via executable instructions stored in one or more computer readable storage mediums (described in further detail below). A logical instantiation of the CN 1120 may be referred to as a network slice 1701. A logical instantiation of a portion of the CN 1120 may be referred to as a network sub-slice 1702 (e.g., the network sub-slice 1702 is shown to include the PGW 1123 and the PCRF 1126).

NFV architectures and infrastructures may be used to virtualize one or more network functions, alternatively performed by proprietary hardware, onto physical resources comprising a combination of industry-standard server hardware, storage hardware, or switches. In other words, NFV systems can be used to execute virtual or reconfigurable implementations of one or more EPC components/functions.

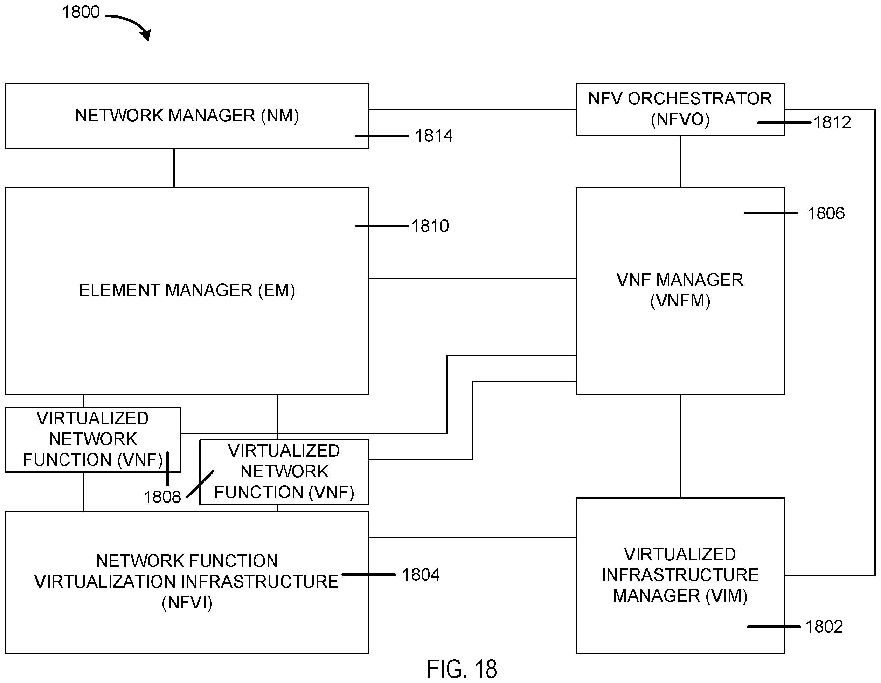

FIG. 18 is a block diagram illustrating components, according to some example embodiments, of a system 1800 to support NFV. The system 1800 is illustrated as including a virtualized infrastructure manager (VIM) 1802, a network function virtualization infrastructure (NFVI) 1804, a VNF manager (VNFM) 1806, virtualized network functions (VNFs) 1808, an element manager (EM) 1810, an NFV Orchestrator (NFVO) 1812, and a network manager (NM) 1814.

The VIM 1802 manages the resources of the NFVI 1804. The NFVI 1804 can include physical or virtual resources and applications (including hypervisors) used to execute the system 1800. The VIM 1802 may manage the life cycle of virtual resources with the NFVI 1804 (e.g., creation, maintenance, and tear down of virtual machines (VMs) associated with one or more physical resources), track VM instances, track performance, fault and security of VM instances and associated physical resources, and expose VM instances and associated physical resources to other management systems.

The VNFM 1806 may manage the VNFs 1808. The VNFs 1808 may be used to execute EPC components/functions. The VNFM 1806 may manage the life cycle of the VNFs 1808 and track performance, fault and security of the virtual aspects of VNFs 1808. The EM 1810 may track the performance, fault and security of the functional aspects of VNFs 1808. The tracking data from the VNFM 1806 and the EM 1810 may comprise, for example, performance measurement (PM) data used by the VIM 1802 or the NFVI 1804. Both the VNFM 1806 and the EM 1810 can scale up/down the quantity of VNFs of the system 1800.

The NFVO 1812 may coordinate, authorize, release and engage resources of the NFVI 1804 in order to provide the requested service (e.g., to execute an EPC function, component, or slice). The NM 1814 may provide a package of end-user functions with the responsibility for the management of a network, which may include network elements with VNFs, non-virtualized network functions, or both (management of the VNFs may occur via the EM 1810).

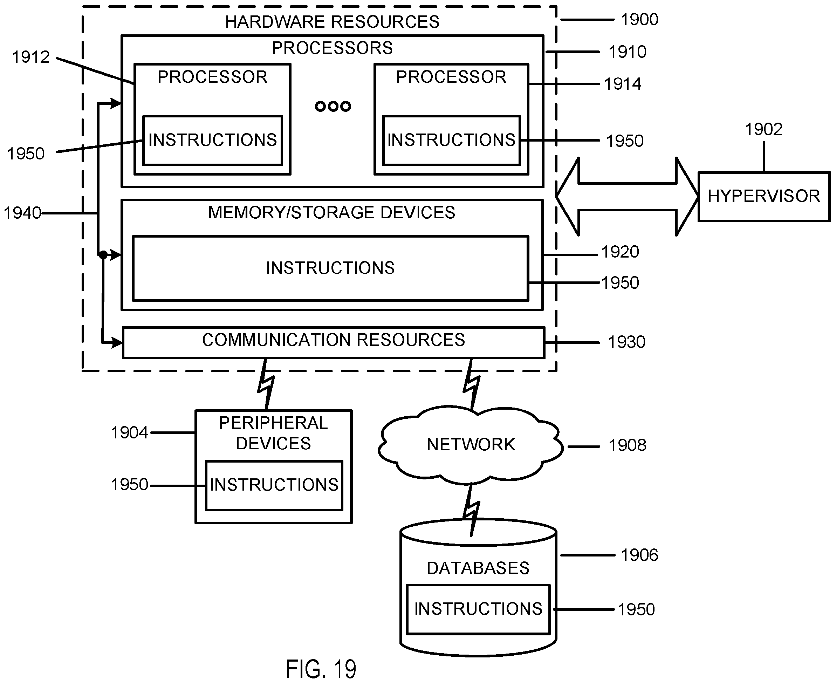

FIG. 19 is a block diagram illustrating components, according to some example embodiments, able to read instructions from a machine-readable or computer-readable medium (e.g., a non-transitory machine-readable storage medium) and perform any one or more of the methodologies discussed herein. Specifically, FIG. 19 shows a diagrammatic representation of hardware resources 1900 including one or more processors (or processor cores) 1910, one or more memory/storage devices 1920, and one or more communication resources 1930, each of which may be communicatively coupled via a bus 1940. For embodiments where node virtualization (e.g., NFV) is utilized, a hypervisor 1902 may be executed to provide an execution environment for one or more network slices/sub-slices to utilize the hardware resources 1900.

The processors 1910 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 1912 and a processor 1914.

The memory/storage devices 1920 may include main memory, disk storage, or any suitable combination thereof. The memory/storage devices 1920 may include, but are not limited to any type of volatile or non-volatile memory such as dynamic random access memory (DRAM), static random-access memory (SRAM), erasable programmable read-only memory (EPROM), electrically erasable programmable read-only memory (EEPROM), Flash memory, solid-state storage, etc.

The communication resources 1930 may include interconnection or network interface components or other suitable devices to communicate with one or more peripheral devices 1904 or one or more databases 1906 via a network 1908. For example, the communication resources 1930 may include wired communication components (e.g., for coupling via a Universal Serial Bus (USB)), cellular communication components, NFC components, Bluetooth® components (e.g., Bluetooth® Low Energy), Wi-Fi® components, and other communication components.

Instructions 1950 may comprise software, a program, an application, an applet, an app, or other executable code for causing at least any of the processors 1910 to perform any one or more of the methodologies discussed herein. The instructions 1950 may reside, completely or partially, within at least one of the processors 1910 (e.g., within the processor's cache memory), the memory/storage devices 1920, or any suitable combination thereof. Furthermore, any portion of the instructions 1950 may be transferred to the hardware resources 1900 from any combination of the peripheral devices 1904 or the databases 1906. Accordingly, the memory of processors 1910, the memory/storage devices 1920, the peripheral devices 1904, and the databases 1906 are examples of computer-readable and machine-readable media.

### D. Additional Examples

Example 1 is an apparatus for a user equipment (UE) to provide subscriber privacy protection in a cellular network. The apparatus includes a memory interface and a baseband processor. The memory interface to send or receive, to or from a memory device, a home network public key. The baseband processor to: encrypt a permanent subscription identifier using the home network public key to produce a concealed identifier; and generate a message for a serving network comprising the concealed identifier.
Example 2 is the apparatus of Example 1, wherein the permanent subscription identifier comprises a mobile country code (MCC), a mobile network code (MNC), and a subscription identifier, and wherein to encrypt the permanent subscription identifier, the baseband processor is configured to encrypt the subscription identifier using the home public network key without encrypting the MCC or the MNC.
Example 3 is the apparatus of Example 2, wherein the permanent subscription identifier comprises an international mobile subscriber identity (IMSI) and the subscription identifier comprises a mobile subscriber identification number (MSIN).
Example 4 is the apparatus of Example 1, wherein the message comprises an attach message or other message used in a procedure to establish a signaling connection between the UE and the serving network.
Example 5 is the apparatus of any of Examples 1-4, wherein the baseband processor is further configured to: decrypt a fresh home network public key received from a home public land mobile network (PLMN); and store, through the memory interface, the fresh home network public key in the memory device for use with subsequent messages to the serving network.
Example 6 is the apparatus of Example 5, wherein the baseband processor is configured to decrypt the fresh home network public key using a symmetric key shared between the UE and the home PLMN.
Example 7 is the apparatus of any of Examples 1-4, wherein the baseband processor is further configured to use a nonce value to encrypt the permanent subscription identifier to introduce randomness for nontraceability and/or unlinkability between the message and one or more other messages communicated between the serving network and the UE.
Example 8 is the apparatus of any of Examples 1-4, wherein the baseband processor is further configured to use a timestamp value to encrypt the permanent subscription identifier to introduce randomness for nontraceability and/or unlinkability between the message and one or more other messages communicated between the serving network and the UE.
Example 9 is a computer-readable storage medium having computer-readable instructions stored thereon. The computer-readable instructions to, when executed, instruct a processor of a home public land mobile network (PLMN), the computer-readable instructions to: process an authentication request to authenticate a user equipment (UE), wherein the authentication request includes a concealed identifier; extract, from the concealed identifier, a mobile country code (MCC), a mobile network code (MNC), and an encrypted subscription identifier; decrypt the encrypted subscription identifier to obtain a permanent subscription identifier and a replay detection value; if, based on the replay detection value, a replay attack is detected, generate an authentication reject message; and if, based on the value, the replay attack is not detected: use the permanent subscription identifier to identify the UE; generate an authentication vector; and generate a authentication information message comprising the authentication vector and the permanent subscription identifier.
Example 10 is the computer-readable medium of Example 9, wherein the replay detection value comprises a random or other nonce value, and wherein the computer-readable instructions are further to: determine whether the replay detection value number has been previously obtained or received; if the replay detection value number has been previously obtained or received, determine that the replay attack is detected; and if the replay detection value number has not been previously obtained or received, determine that the replay attack is not detected.
Example 11 is the computer-readable medium of Example 9, wherein the replay detection value is based on a timestamp or counter value generated by the UE, and wherein the computer-readable instructions are further to: determine whether the timestamp or counter value is within an allowed range; if the timestamp or counter value is not within the allowed range, determine that the replay attack is detected; and if the timestamp or counter value is within an allowed range, determine that the replay attack is not detected.
Example 12 is the computer-readable medium of Example 11, wherein the replay detection value comprises a keyed hash function of the timestamp or counter value, wherein the keyed hash function uses a symmetric key shared between the UE and the home PLMN, and wherein the computer-readable instructions are further to verify that the replay detection value is derived correctly from the timestamp or counter value and the symmetric key according to the keyed hash function.
Example 13 is the computer-readable medium of Example any of Examples 9-12, wherein the computer-readable instructions are further to conceal the permanent subscription identifier in the authentication information message with a key shared between an access and mobility function (AMF) of a serving network and a security anchor function (SEAF) of the home PLMN.
Example 14 is the computer-readable medium of Example 13, wherein the computer-readable instructions are further to forward the authentication information message from the home PLMN through the AMF to the UE to complete an attach procedure.
Example 15 is a method for a session management function (SMF) of a wireless wide area network (WWAN) to re-authenticate a user equipment (UE) with a server in an external data network. The method includes: in response to a decision for secondary re-authentication and initiation of extensible authentication protocol (EAP) re-authentication, sending an EAP request for identity message from the SMF to the UE; receiving, from the UE, an EAP response including a fast-reauthorization identity; forwarding the EAP response including the fast -reauthorization identity to a user plane function (UPF) of the WWAN to establish an end-to-end connection between the SMF and the server in the external data network; and receiving, from the server in the external data network through the UPF, an EAP success message or an EAP failure message.
Example 16 is the method of Example 15, further comprising, in response to receiving the EAP success message from the server in the external data network, generating an indication of EAP success for communication to the UE.
Example 17 is the method of Example 16, wherein generating the indication of EAP success for communication to the UE comprises: generating a session management (SM) acknowledge (ACK) message with re-authorization acceptance and the indication of EAP success; and sending the SM ACK message to an access and mobility management function (AMF) of the WWAN to forward to the re-authorization acceptance and the indication of EAP success to the UE.
Example 18 is the method of Example 15, further comprising, in response to receiving the EAP failure message from the server in the external data network: sending a session modification request to the UPF; and in response to receiving a session modification response from the UPF, generating an indication of the EAP failure for communication to the UE.
Example 19 is the method of Example 18, generating the indication of the EAP failure for communication to the UE comprises: generating a session management (SM) acknowledge (ACK) message with re-authorization failure and the indication of EAP failure; and sending the SM ACK message to an access and mobility management function (AMF) of the WWAN to forward to the re-authorization failure and the indication of EAP failure to the UE.
Example 20 is the method of Example 15, further comprising receiving the decision for secondary re-authentication and initiation of extensible authentication protocol (EAP) re-authentication from the server in the external data network, wherein the server comprises an application server or an authentication, authorization, and accounting (AAA) server.
Example 21 is the method of Example 15, determining, at the SMF, the decision for secondary re-authentication and initiation of extensible authentication protocol (EAP) re-authentication from the server in the external data network based on one or more of a first elapsed time from a previous primary authentication between the UE and the WWAN, a second elapsed time from a previous secondary authentication between the UE and the server in the external data network, a determination to refresh security keys, a subscription upgrade, and a subscription downgrade.
Example 22 is an apparatus comprising means to perform a method as exemplified in any of Examples 15-21.
Example 23 is a machine-readable storage including machine-readable instructions, when executed, to implement a method as exemplified in any of Examples 15-21.
Example 24 is a user equipment (UE), comprising: a session management (SM) entity and an EAP client. The session management (SM) entity in a non-access stratum (NAS) layer to process a plurality of secondary authentication requests from a network and to send a plurality of secondary authentication responses to the network, wherein the SM entity provides transport for a secondary extensible authentication protocol (EAP) process for re-authentication of the UE to a third party EAP server. The EAP client to: process an EAP request identity message from a session management function (SMF) in the network; generate an EAP response identity message for the SMF; and exchange a plurality of NAS messages with the third party EAP server associated with the secondary EAP process for re-authentication.
Example 25 is the UE of Example 24, wherein the EAP client is further to process an explicit or implicit authentication acceptance or authentication failure from the network.
Example 26 is the UE of Example 24, wherein the EAP client is further to generate an authentication failure message to communicate to the network.
Example 27 is the UE of any of Examples 24-26, wherein the SM entity in the NAS layer is configured to provide the transport for the secondary EAP process without processing EAP request types or methods.
Example 28 is the UE of any of Examples 24-26, wherein the SM entity in the NAS layer is configured to handle primary re-authentication procedures, secondary re-authentication procedures, or both primary and secondary re-authentication procedures.
Example 29 is the UE of any of Examples 24-26, further comprising a mobility management (MM) entity in the NAS layer to process a plurality of primary authentication requests from a network and to send a plurality of primary authentication responses to the network, wherein the MM entity provides transport for primary EAP authentication processes and re-authentication processes of the UE to the network without processing EAP request types or methods.

It will be understood by those having skill in the art that many changes may be made to the details of the above-described embodiments without departing from the underlying principles of the invention. The scope of the present invention should, therefore, be determined only by the following claims.

## Claims

1. A method for a session management function (SMF) of a wireless wide area network (WWAN) to re-authenticate a user equipment (UE) with a server in an external data network, the method comprising:
in response to a decision for secondary re-authentication and initiation of extensible authentication protocol (EAP) re-authentication, sending an EAP request for identity message from the SMF to the UE;
receiving, from the UE, an EAP response including a fast-reauthorization identity;
forwarding the EAP response including the fast -reauthorization identity to a user plane function (UPF) of the WWAN to establish an end-to-end connection between the SMF and the server in the external data network; and
receiving, from the server in the external data network through the UPF, an EAP success message or an EAP failure message.

2. The method of claim 1, further comprising, in response to receiving the EAP success message from the server in the external data network, generating an indication of EAP success for communication to the UE.

3. The method of claim 2, wherein generating the indication of EAP success for communication to the UE comprises:
generating a session management (SM) acknowledge (ACK) message with reauthorization acceptance and the indication of EAP success; and
sending the SM ACK message to an access and mobility management function (AMF) of the WWAN to forward to the re-authorization acceptance and the indication of EAP success to the UE.

4. The method of any of claims 1 to 3, further comprising, in response to receiving the EAP failure message from the server in the external data network:
sending a session modification request to the UPF; and
in response to receiving a session modification response from the UPF, generating an indication of the EAP failure for communication to the UE.

5. The method of claim 4, wherein generating the indication of the EAP failure for communication to the UE comprises:
generating a session management (SM) acknowledge (ACK) message with reauthorization failure and the indication of EAP failure; and
sending the SM ACK message to an access and mobility management function (AMF) of the WWAN to forward to the re-authorization failure and the indication of EAP failure to the UE.

6. The method of any of claims 1 to 6, further comprising receiving the decision for secondary reauthentication and initiation of extensible authentication protocol (EAP) reauthentication from the server in the external data network, wherein the server comprises an application server or an authentication, authorization, and accounting (AAA) server.

7. The method of any of claims 1 to 6, wherein determining, at the SMF, the decision for secondary re-authentication and initiation of extensible authentication protocol (EAP) reauthentication from the server in the external data network based on one or more of a first elapsed time from a previous primary authentication between the UE and the WWAN, a second elapsed time from a previous secondary authentication between the UE and the server in the external data network, a determination to refresh security keys, a subscription upgrade, and a subscription downgrade.

8. An apparatus comprising means to perform a method as claimed in any of claims 1-7.

9. Machine-readable storage including machine-readable instructions, when executed, to implement a method as claimed in any of claims 1-7.
